# EUROPÄISCHE PATENTSCHRIFT

(11) **EP 4 075 045 B1**
(45) Veröffentlichungstag und Bekanntmachung des Hinweises auf die Patenterteilung: **26.02.2025**
(21) Anmeldenummer: 22161131.2
(22) Anmeldetag: 09.03.2022
(51) Int. Cl.: F16M 7/00

(54) **NIVELLIERSCHUH UND VERFAHREN ZUM MONTIEREN EINES NIVELLIERSCHUHS**
LEVELLER AND METHOD FOR MOUNTING SAME
SABOT DE NIVELLEMENT ET PROCÉDÉ DE MONTAGE D'UN SABOT DE NIVELLEMENT

(30) Priorität: 11.03.2021 DE 102021105969
(43) Veröffentlichungstag der Anmeldung: 19.10.2022
(73) Patentinhaber: ISOTILDAM Schwingungstechnik GmbH, 74417 Gschwend (DE)
(72) Erfinder: Güney, Süleyman, 74417 Gschwend (DE)
(74) Vertreter: Witte, Weller & Partner Patentanwälte mbB

(56) Entgegenhaltungen:
- DE-A1- 102008 060 334
- DE-A1- 2 424 516

## Beschreibung

Die vorliegende Erfindung betrifft einen Nivellierschuh mit einer Grundplatte, die eine Bodenfläche und eine erste Gleitfläche aufweist, einer Kopfplatte, die eine Standfläche und eine zweite Gleitfläche aufweist, und mit einem Keilelement, das zwischen der Grundplatte und der Kopfplatte anliegend an der ersten und der zweiten Gleitfläche angeordnet ist, wobei das Keilelement eine Schraubspindel aufweist, die drehbar und in einer Axialrichtung der Schraubspindel unverschiebbar in dem Keilelement gelagert ist, wobei eine Drehung der Schraubspindel ein Verschieben des Keilelements relativ zu der Kopfplatte und der Grundplatte bewirkt.

Des Weiteren betrifft die vorliegende Erfindung ein Verfahren zum Montieren eines solchen Nivellierschuhs.

Ein solcher Nivellierschuh ist bspw. aus den Druckschriften DE 44 29 813 C2 und DE 10 2008 060334 A1 bekannt.

DE 10 2008 060334 A1 zeigt einen Wagenkasten eines Schienenfahrzeugs mit darin eingebauter Nasszelle, die auf einem Bodenbereich des Wagenkastens abgestützt ist, wobei die Nasszelle einen selbsttragenden Fußboden aufweist und wenigstens eine höheneinstellbare und fixierbare Abstützung vorgesehen ist, die zwischen dem Fußboden der Nasszelle und dem Bodenbereich des Wagenkastens angeordnet ist.

Nivellierschuhe werden dazu verwendet, Maschinen und Anlagen auf einem Boden zu lagern und dabei die Möglichkeit bereitzustellen, die Maschine oder Anlage nach dem Aufstellen exakt auszurichten. Insbesondere werden solche Nivellierschuhe zum Aufstellen von Umformmaschinen, Werkzeugmaschinen und Anlagen, Pressen, Stanzen, Hämmern, Fräsmaschinen, Drehmaschinen, Pumpen, Kompressoren, Klimageräten, Motoren, Ventilatoren, Lüftungsgeräten, Klimageräten und Aggregaten verwendet. Des Weiteren werden die Nivellierschuhe nach der Nivellierung, d.h. dem Ausrichten der Maschine, verspannt, um ein eventuell noch vorhandenes Spiel in dem Nivellierschuh zu entfernen. Auf diese Weise kann mittels des Nivellierschuhs auf das dynamische Verhalten der aufgestellten Maschine oder Anlage positiv eingewirkt werden.

Üblicherweise wird nämlich in dem Bereich der Maschinenfüße eine Dämpfung der Maschine bewirkt, um eine Ausbreitung von Schallwellen, insbesondere Körperschallwellen, und Vibrationen der Maschine zu vermeiden. Auf diese Weise kann zum einen die dynamische Belastung der Maschine herabgesetzt und zum anderen die durch die Maschine verursachte Lärmbelastung und Schwingungen verringert werden.

Der Aufbau eines Nivellierschuhs ist dabei üblicherweise dreiteilig. Zwischen einer Grundplatte und einer Kopfplatte ist ein Keilelement vorgesehen, das mittels einer Schraubspindel weiter zwischen die Grundplatte und die Kopfplatte hineingedreht bzw. aus dieser herausgezogen werden kann. Aufgrund der Keilflächen kann durch die in der Betriebsposition dann horizontale Bewegung des Keilelements eine vertikale Bewegung der Kopfplatte relativ zu der Grundplatte bewirkt werden. Auf diese Weise erfolgt eine Nivellierung der Maschine. Die in dem Keilelement vorgesehene Schraubspindel ist dabei mit einem Verankerungselement verschraubt. Das Verankerungselement wiederum ist in der Grundplatte und der Kopfplatte derart festgelegt, dass eine Bewegung des Verankerungselements in einer Längsrichtung der Schraubspindel nicht möglich ist. Auf diese Weise kann durch Drehen der Schraubspindel eine Bewegung des Keilelements in horizontaler Richtung bzw. in Längsrichtung der Schraubspindel relativ zu der Grundplatte und der Kopfplatte bewirkt werden.

Die Schraubspindel weist daher in der Regel ein Feingewinde auf, um mit einem möglichst geringen, auf die Schraubspindel beaufschlagten Drehmoment eine Höhenveränderung bewirken zu können. Ein derartiges Gewinde kann bspw. derart fein gewählt sein, dass eine Umdrehung der Schraubspindel eine Höhenänderung von etwa 1 µm bewirkt.

Ein wichtiger Aspekt in dem Aufbau des Nivellierschuhs ist, dass die Schraubspindel sich mit möglichst geringem Drehwiderstand in einem Durchgangsgewinde des Verankerungselements drehen kann, durch das die Schraubspindel geschraubt ist. Aufgrund von Belastungen kann es jedoch sein, dass die Schraubspindel senkrecht zu ihrer Längsachse eine Biegung erfährt, wodurch eventuell ein Verkanten des Gewindes bzw. ein deutlich größerer Drehwiderstand in dem Durchgangsgewinde vorliegt.

Deshalb wurde bspw. in der Druckschrift DE 44 29 813 C2 vorgeschlagen, an der Schraubspindel eine Art Zapfen vorzusehen, der in dem Keilelement frei drehbar gelagert ist.

Ein solcher Zapfen muss aber in der Lagerung des Keilelements immer noch ein gewisses Spiel aufweisen, damit er in der Lagerung frei drehbar ist. Bei diesem Spiel kann es aber immer noch zu Biegungen der Schraubspindel um ein gewisses Winkelmaß kommen. Aufgrund des Feingewindes der Schraubspindel kann aber bereits ein derart geringes Durchbiegen der Schraubspindel zu einem erhöhten Drehwiderstand führen.

Ein weiterer wichtiger Punkt bei derartigen Nivellierschuhen ist die Anbringung der zu lagernden Maschine an dem Nivellierschuh. In der Regel weist ein Maschinenfuß einer Maschine oder Anlage eine zentrale Anbringung, bspw. mittels einer Verschraubung auf. Entsprechend wäre diese Anbringung auch zentral bzw. mittig zumindest durch die Kopfplatte des Nivellierschuhs zu schrauben, um eine entsprechende Verbindung bereitzustellen, die den Nivellierschuh symmetrisch belastet. Gerade in dieser Position ist jedoch häufig das Verankerungselement vorgesehen, um eine mittige Lagerung der Schraubspindel bereitzustellen und einen im Wesentlichen symmetrischen Aufbau des Nivellierschuhs und damit ein dynamisch berechenbares Verhalten bereitzustellen.

Die Druckschrift DE 10 2011 106 679 B3 zeigt einen Nivellierschuh mit einer Grundplatte, die eine Bodenfläche und eine erste Gleitfläche aufweist, einer Kopfplatte, die eine Standfläche und eine zweite Gleitfläche aufweist, und mit einem Keilelement, das zwischen der Grundplatte und der Kopfplatte anliegend an der ersten und der zweiten Gleitfläche angeordnet ist, wobei das Keilelement eine Schraubspindel aufweist, die drehbar und in einer Axialrichtung der Schraubspindel unverschiebbar in dem Keilelement gelagert ist, wobei der Nivellierschuh des Weiteren ein erstes Verankerungselement aufweist, durch das die Schraubspindel geschraubt ist, und wobei der Nivellierschuh des Weiteren ein zweites Verankerungselement aufweist, durch das die Schraubspindel geschraubt ist, wobei das erste Verankerungselement und das zweite Verankerungselement in der Grundplatte und der Kopfplatte derart festgelegt sind, dass eine Drehung der Schraubspindel ein Verschieben des Keilelements relativ zu der Kopfplatte und der Grundplatte bewirkt.

Bei herkömmlichen Nivellierschuhen besteht jedoch die Gefahr, dass sich nach Anbringung der zu lagernden Maschine am Nivellierschuh die Nivellierung der Maschine mit der Zeit verschlechtert, da sich die Schraubspindel eines oder mehrerer unter der betreffenden Maschine befindlicher Maschinenschuhe aufgrund von Maschinenschwingungen lösen kann. Ein solches ungewolltes Lösen der Schraubspindel bewirkt eine horizontale Bewegung des Keilelements und damit eine vertikale Bewegung der Kopfplatte relativ zur Grundplatte, was wiederum zu einem Verlust der eingestellten Nivellierung führt. Dieses Problem tritt auch auf, wenn die Maschine über die Maschinenschuhe mit dem Boden verschraubt ist, denn auch in diesem Fall kann sich die Schraubspindel infolge von Maschinenschwingungen lösen.

Dass Schraubenverbindungen in der Praxis vielfältigen Beanspruchungen ausgesetzt sind, die zum unbeabsichtigten Lösen dieser Verbindungen führen können, ist bekannt. Um Schraubenverbindungen gegen Setzen, Lösen oder Verlieren zu sichern, gibt es verschiedene Arten der Schraubensicherung, um das selbstständige Lösen einer Schraubenverbindung zu vermeiden. Um die gewünschte Vorspannkraft einer Schraubenverbindung zu sichern, werden meist klebende Losdrehsicherungen verwendet. Dabei wird in den Spalt zwischen Außen- und Innengewinde während der Montage Klebstoff eingebracht, welcher dort aushärtet und im Gewinde durch seine Adhäsionskraft an der Oberfläche sowie Kohäsionskräfte innerhalb des Klebstoffes Bewegungen im Gewinde verhindert. Derartige Klebeverbindungen sind für die Anwendung in Nivellierschuhen jedoch ungeeignet, da Nivellierschuhe in der Praxis häufig nachjustiert werden, so dass die Klebeverbindung häufig gelöst und neu angebracht werden müsste.

Es ist daher eine Aufgabe der vorliegenden Erfindung, einen verbesserten Nivellierschuh bereitzustellen, der eine präzise und schwingungsresistente Nivellierung von Maschinen ermöglicht.

Gemäß einem ersten Aspekt der Erfindung wird daher ein Nivellierschuh vorgeschlagen mit einer Grundplatte, die eine Bodenfläche und eine erste Gleitfläche aufweist, einer Kopfplatte, die eine Standfläche und eine zweite Gleitfläche aufweist, und mit einem Keilelement, das zwischen der Grundplatte und der Kopfplatte anliegend an der ersten und der zweiten Gleitfläche angeordnet ist, wobei das Keilelement eine Schraubspindel aufweist, die drehbar und in einer Axialrichtung der Schraubspindel unverschiebbar in dem Keilelement gelagert ist, wobei eine Drehung der Schraubspindel ein Verschieben des Keilelements relativ zu der Kopfplatte und der Grundplatte bewirkt, wobei der Nivellierschuh des Weiteren eine Sperreinrichtung, insbesondere eine mechanische Sperreinrichtung, zum Vermeiden eines Verschiebens des Keilelements relativ zu der Kopfplatte und der Grundplatte aufweist, wobei die Sperreinrichtung mit der Schraubspindel wechselwirkt. Insbesondere wird das Verschieben durch einen Formschluss und/oder einen Reibschluss vermieden.

Gemäß einem zweiten Aspekt der Erfindung wird daher ein Nivellierschuh vorgeschlagen mit einer Grundplatte, die eine Bodenfläche und eine erste Gleitfläche aufweist, einer Kopfplatte, die eine Standfläche und eine zweite Gleitfläche aufweist, und mit einem Keilelement, das zwischen der Grundplatte und der Kopfplatte anliegend an der ersten und der zweiten Gleitfläche angeordnet ist, wobei das Keilelement eine Schraubspindel aufweist, die drehbar und in einer Axialrichtung der Schraubspindel unverschiebbar in dem Keilelement gelagert ist, wobei eine Drehung der Schraubspindel ein Verschieben des Keilelements relativ zu der Kopfplatte und der Grundplatte bewirkt, wobei der Nivellierschuh des Weiteren eine Sperreinrichtung, insbesondere eine mechanische Sperreinrichtung, zum Vermeiden eines Verschiebens des Keilelements relativ zu der Kopfplatte und der Grundplatte aufweist, wobei die Sperreinrichtung mit dem Keilelement wechselwirkt. Insbesondere wird das Verschieben durch einen Formschluss und/oder einen Reibschluss vermieden.

Splintsicherungen in Kronenmuttern eignen sich grundsätzlich zum Sichern von Schraubspindeln. Sie sind jedoch unter Umständen nicht sehr präzise. Eine Kronenmutter ist eine erweiterte Sonderform der Sechskantmutter, die senkrecht zu ihrer Achse an einer Oberseite der Mutter eine Art geschlitzten Ring, die sogenannte Krone, aufweist. Diese Krone dient dazu, die Mutter mit Hilfe eines Splintes gegen Verdrehen zu sichern. Hierzu ist im Schraubenschaft eine Querbohrung vorgesehen, durch welche der Splint geführt ist. Der Splint greift in die Krone der Kronenmutter ein und verbindet so die Kronenmutter mit der Schraube. Problematisch kann unter Umständen sein, dass derartige Kronenmuttern eine genormte Anzahl von Schlitzen aufweisen, welche in Umfangsrichtung durch entsprechende Stege voneinander getrennt sind. Um die Schraube sichern zu können, muss die in der Schraube vorgesehene Querbohrung mit zwei gegenüberliegenden Schlitzen der Kronenmutter fluchten. Im Rahmen der Nivellierung kann die Schraubspindel jedoch eine Vielzahl von Zwischenwinkellagen einnehmen, die eine solche Fluchtung nicht oder nur zu Lasten eines Spiels zulassen.

Die Schraubspindel kann auf unterschiedliche Weise in dem Keilelement gelagert sein. Beispielsweise kann die Schraubspindel mit einem einzigen Verankerungselement verschraubt sein, welches wiederum in der Grundplatte und der Kopfplatte derart festgelegt ist, dass eine Bewegung des Verankerungselements in einer Längsrichtung der Schraubspindel nicht möglich ist. Alternativ kann die Schraubspindel beispielsweise sowohl in einem ersten Verankerungselement als auch in einem zweiten Verankerungselement verschraubt sein, wobei jedes der Verankerungselemente eine mit einem Gewinde versehene Durchgangsbohrung aufweist, durch die die Schraubspindel geschraubt ist. Auch in diesem Fall ist jedes der beiden Verankerungselemente sowohl in der Kopfplatte als auch in der Grundplatte derart festgelegt, dass eine Bewegung des jeweiligen Verankerungselements in einer Längsrichtung der Schraubspindel nicht möglich ist, so dass eine Drehung der Schraubspindel in dem ersten Verankerungselement und in dem zweiten Verankerungselement eine Relativbewegung des Keilelements relativ zu der Kopfplatte und der Grundplatte bewirkt, wodurch ein Abstand zwischen der Kopfplatte und der Grundplatte einstellbar wird. Alternativ kann der Nivellierschuh auch ein fest mit der Grundplatte verbundenes Stützelement, durch das der Spindelschaft geführt ist, aufweisen. Das Stützelement weist in dieser Alternative vorzugsweise eine Gewindehülse auf, durch die der Spindelschaft geschraubt ist. Die Gewindehülse kann beispielsweise an einem Wälzlager gelagert sein, so dass der Spindelschaft im Betrieb während des Drehens frei rotieren kann und die Verstellfunktion des Keilelements erhalten bleibt. Auf diese Weise kann dann eine Nivellierung einer gelagerten Maschine bewirkt werden.

Unter dem Begriff "Sperreinrichtung" wird eine mechanische Vorrichtung zum Vermeiden eines Verschiebens des Keilelements relativ zu der Kopfplatte und der Grundplatte verstanden. Das Vermeiden des Verschiebens des Keilelements relativ zu der Kopfplatte und der Grundplatte kann beispielsweise durch Sperren bzw. Fixieren des Keilelements und/oder durch Sperren bzw. Fixieren der drehbar in dem Keilelement gelagerten Schraubspindel erfolgen. Dies kann insbesondere durch einen Kraftschluss und/oder einen Formschluss erfolgen.

Gemäß einem dritten Aspekt der Erfindung wird ein Verfahren zum Montieren eines Nivellierschuhs vorgeschlagen, mit den folgenden Schritten:
- Bereitstellen eines Nivellierschuhs mit einer Grundplatte, die eine Bodenfläche und eine erste Gleitfläche aufweist, einer Kopfplatte, die eine Standfläche und eine zweite Gleitfläche aufweist, und mit einem Keilelement, das zwischen der Grundplatte und der Kopfplatte anliegend an der ersten und der zweiten Gleitfläche angeordnet ist, wobei das Keilelement eine Schraubspindel aufweist, die drehbar und in einer Axialrichtung der Schraubspindel unverschiebbar in dem Keilelement gelagert ist, wobei eine Drehung der Schraubspindel ein Verschieben des Keilelements relativ zu der Kopfplatte und der Grundplatte bewirkt,
- Bereitstellen einer Sperreinrichtung zum Vermeiden eines Verschiebens des Keilelements relativ zu der Kopfplatte und der Grundplatte,
- Nivellieren des Nivellierschuhs mittels der Schraubspindel, und
- Sperren des nivellierten Nivellierschuhs mittels der Sperreinrichtung, wobei die Sperreinrichtung mit der Schraubspindel wechselwirkt.

Gemäß einem vierten Aspekt der Erfindung wird ein Verfahren zum Montieren eines Nivellierschuhs vorgeschlagen, mit den folgenden Schritten:
- Bereitstellen eines Nivellierschuhs mit einer Grundplatte, die eine Bodenfläche und eine erste Gleitfläche aufweist, einer Kopfplatte, die eine Standfläche und eine zweite Gleitfläche aufweist, und mit einem Keilelement, das zwischen der Grundplatte und der Kopfplatte anliegend an der ersten und der zweiten Gleitfläche angeordnet ist, wobei das Keilelement eine Schraubspindel aufweist, die drehbar und in einer Axialrichtung der Schraubspindel unverschiebbar in dem Keilelement gelagert ist, wobei eine Drehung der Schraubspindel ein Verschieben des Keilelements relativ zu der Kopfplatte und der Grundplatte bewirkt,

- Bereitstellen einer Sperreinrichtung zum Vermeiden eines Verschiebens des Keilelements relativ zu der Kopfplatte und der Grundplatte,
- Nivellieren des Nivellierschuhs mittels der Schraubspindel, und
- Sperren des nivellierten Nivellierschuhs mittels der Sperreinrichtung, wobei die Sperreinrichtung mit dem Keilelement wechselwirkt.

Auf diese Weise wird ein Nivellierschuh gemäß dem ersten Aspekt der Erfindung oder einer seiner Ausgestaltungen oder ein Nivellierschuh gemäß dem zweiten Aspekt oder einer seiner Ausgestaltungen und den entsprechenden Vorteilen montiert.

Die eingangs gestellte Aufgabe wird somit vollumfänglich gelöst.

In einer Ausgestaltung des Nivellierschuhs gemäß dem ersten Aspekt der Erfindung ist vorgesehen, dass der Nivellierschuh des Weiteren eine an dem Keilelement befestigte Haltevorrichtung zur Aufnahme der Sperreinrichtung aufweist, wobei die Sperreinrichtung ein drehfest an der Haltevorrichtung gelagertes Befestigungselement ist, das mit einem Spindelkopf der Schraubspindel drehmomentübertragend koppelbar ist.

Unter einer "Haltevorrichtung" wird ein Stützprofil verstanden, welches lösbar oder unlösbar mit dem Keilelement verbunden ist. Die Schraubspindel liegt mit einem Spindelkopf entlang einer Axialrichtung der Schraubspindel an dem Keilelement an und kann von einer Bedienperson per Hand oder mittels eines geeigneten Werkzeugs gedreht werden. Mittels einer Spindelmutter, die auf die Schraubspindel aufgeschraubt ist, kann die Schraubspindel in der Axialrichtung der Schraubspindel relativ zu dem Keilelement festgelegt werden, so dass die Schraubspindel in der Axialrichtung nicht relativ zu dem Keilelement bewegbar ist. Das Befestigungselement ist dazu eingerichtet, eine drehmomentübertragende Kopplung mit dem Spindelkopf der Schraubspindel zu bilden. Unter "drehmomentübertragend" ist dabei zu verstehen, dass zwar ein gewisses, insbesondere zur Kopplung erforderliches, Passungsspiel zwischen dem Befestigungselement und der Schraubspindel vorgesehen ist, jedoch keine darüber hinausgehende Relativbewegung der Elemente zueinander. Auf diese Weise kann eine verzögerungsfreie Drehmomentübertragung realisiert werden.

Das Befestigungselement kann beispielsweise einen Schaft mit einem als Außensechskant ausgebildeten Endabschnitt aufweisen, der mit einem als Innensechskant ausgebildeten Spindelkopf der Schraubspindel fluchtend und drehmomentübertragend verbindbar ist. Alternativ kann das Befestigungselement beispielsweise einen Schaft mit einem als Innensechskant ausgebildeten Endabschnitt aufweisen, der mit einem als Außensechskant ausgebildeten Spindelkopf der Schraubspindel fluchtend und drehmomentübertragend verbindbar ist. Es versteht sich von selbst, dass es sich bei den vorgenannten Mitnahmeprofilen nicht zwangsläufig um Sechskantprofile handeln muss. Alternativ sind auch weitere Mitnahmeprofile, die eine drehmomentübertragende Kopplung zwischen dem Befestigungselement und dem Spindelkopf ermöglichen, denkbar (z.B. ovale, dreieckige, viereckige oder vieleckige Mitnahmeprofile).

Ferner ist das Befestigungselement drehfest an der Haltevorrichtung gelagert, so dass das mit dem Spindelkopf der Schraubspindel drehmomentübertragend gekoppelte Befestigungselement eine Sperrstellung einnimmt, in welcher die Schraubspindel gegen ungewolltes Lösen gesichert ist. Die Befestigung an der Haltevorrichtung kann beispielsweise mittels einer Kontermutter erfolgen, insbesondere durch Verspannen der Kontermutter und eines Kopfes des Befestigungselements gegen die Haltevorrichtung. Bei dem Befestigungselement handelt es sich vorzugsweise um eine Schraube, eine Gewindestange, einen Bolzen oder dergleichen.

In einer weiteren Ausgestaltung des Nivellierschuhs gemäß dem ersten Aspekt der Erfindung ist vorgesehen, dass das Befestigungselement sich koaxial zu der Schraubspindel durch eine Durchgangsbohrung der Haltevorrichtung hindurch erstreckt.

Die koaxiale Anordnung des Befestigungselements und der Schraubspindel ermöglicht eine einfache und kompakte Kopplung der beiden Elemente. Alternativ kann das Befestigungselement auch exzentrisch zu der Schraubspindel angeordnet sein.

In einer weiteren Ausgestaltung des Nivellierschuhs gemäß dem ersten Aspekt der Erfindung ist vorgesehen, dass die Haltevorrichtung ein U-förmiges oder C-förmiges Querschnittsprofil mit zwei gegenüberliegenden, parallel zu der Axialrichtung der Spindelschraube verlaufenden freien Enden aufweist, wobei die freien Enden der Haltevorrichtung an parallel zu der Axialrichtung verlaufenden äußeren Seitenwänden des Keilelements befestigt sind.

Die Durchgangsbohrung, durch die sich das Befestigungselement erstreckt, ist dabei vorzugsweise in einem sich zwischen den beiden freien Enden erstreckenden Quersteg und koaxial zu der Schraubspindel angeordnet. Auf diese Weise wird eine einfache und kompakte Kopplung des an der Haltevorrichtung gelagerten Befestigungselements und der Schraubspindel ermöglicht. Die freien Enden der Haltevorrichtung sind vorzugsweise mit dem Keilelement verschraubt.

In einer weiteren Ausgestaltung des Nivellierschuhs gemäß dem ersten Aspekt der Erfindung ist vorgesehen, dass der Nivellierschuh des Weiteren einen Vorsprung zur Aufnahme der Sperreinrichtung aufweist, und wobei die Sperreinrichtung ein drehfest an dem Vorsprung gelagertes Befestigungselement ist, das mit einem Spindelkopf der Schraubspindel drehmomentübertragend koppelbar ist.

Der Vorsprung kann beispielsweise lösbar oder unlösbar mit einer Druckverteilungsplatte verbunden und/oder einem den Nivellierschuh umgebenden Boden verbunden oder verbindbar sein. Diese Verbindung kann insbesondere formschlüssig, kraftschlüssig oder stoffschlüssig ausgebildet sein. An dem Vorsprung ist das mit dem Spindelkopf der Schraubspindel drehmomentübertragend gekoppelte Befestigungselement drehfest gelagert. Die Befestigung an dem Vorsprung kann beispielsweise mittels einer Kontermutter erfolgen, insbesondere durch Verspannen der Kontermutter und eines Kopfes des Befestigungselements gegen den Vorsprung. Bei dem Befestigungselement handelt es sich vorzugsweise um eine Schraube, eine Gewindestange, einen Bolzen oder dergleichen.

In einer weiteren Ausgestaltung des Nivellierschuhs gemäß dem ersten Aspekt der Erfindung ist vorgesehen, dass der Nivellierschuh des Weiteren eine Druckverteilungsplatte aufweist, die mit der Bodenfläche der Grundplatte verbunden ist und den Vorsprung aufweist.

Die Druckverteilungsplatte kann mit einer Fläche versehen sein, die größer als die der Grundplatte ist. Auf diese Weise wird es möglich, den auf den Nivellierschuh lastenden Druck über einen größeren Bereich des Bodens zu verteilen. Insbesondere in der Ausgestaltung mit dem elastischen Element zur Schwingungsentkopplung kann dann vorgesehen sein, dass die Druckverteilungsplatte zwischen dem Boden und dem zumindest einen elastischen Element auf einer Seite der Grundplatte angeordnet ist. Die Druckverteilungsplatte ist vorzugsweise aus Metall ausgebildet. Alternativ kann die Druckverteilungsplatte auch aus einem nicht-metallischen Werkstoff bestehen. Auch Verbundwerkstoffe sind denkbar. Der Vorsprung kann lösbar oder unlösbar mit der Druckverteilungsplatte verbunden sein. Diese Verbindung kann insbesondere formschlüssig, kraftschlüssig oder stoffschlüssig ausgebildet sein.

In einer weiteren Ausgestaltung des Nivellierschuhs gemäß dem ersten Aspekt der Erfindung ist vorgesehen, dass das Befestigungselement sich koaxial zu der Schraubspindel und durch eine Durchgangsbohrung des Vorsprungs hindurch erstreckt.

Die koaxiale Anordnung des Befestigungselements und der Schraubspindel ermöglicht eine einfache und kompakte Kopplung der beiden Elemente. Alternativ kann das Befestigungselement auch exzentrisch zu der Schraubspindel angeordnet sein.

In einer weiteren Ausgestaltung des Nivellierschuhs gemäß dem ersten Aspekt der Erfindung ist vorgesehen, dass zwischen dem Befestigungselement und der Durchgangsbohrung ein Spiel derart vorgesehen ist, dass das Befestigungselement über sämtliche Nivellierbereiche des Nivellierschuhs mit dem Spindelkopf der Schraubspindel drehmomentübertragend koppelbar ist.

Das zwischen dem Befestigungselement und der Durchgangsbohrung vorgesehene Spiel ist notwendig, um die sich während des Nivellierens einstellende vertikale Bewegung des Keilelements und die damit einhergehende vertikale Bewegung des Spindelkopfes relativ zu dem ortsfest an der Druckverteilungsplatte angebrachten Vorsprung auszugleichen. Unter "sämtliche Nivellierbereiche" wird der gesamte Betriebs- bzw. Arbeitsbereich des Nivellierschuhs verstanden, der zwischen einer Minimaleinstellung, bei der ein Abstand zwischen der Bodenplatte und der Kopfplatte minimal ist, und einer Maximaleinstellung, bei der der Abstand zwischen der Bodenplatte und der Kopfplatte maximal ist, liegt. Auf diese Weise wird eine flexible Kopplung des Befestigungselements und des Spindelkopfes sichergestellt. Die Befestigung des Befestigungselements an dem Vorsprung kann beispielsweise mittels einer Kontermutter erfolgen, insbesondere durch Verspannen der Kontermutter und eines Kopfes des Befestigungselements gegen den Vorsprung. Bei dem Befestigungselement handelt es sich vorzugsweise um eine Schraube, eine Gewindestange, einen Bolzen oder dergleichen.

In einer weiteren Ausgestaltung des Nivellierschuhs gemäß dem ersten Aspekt der Erfindung ist vorgesehen, dass das Befestigungselement ein äußeres Mitnahmeprofil und der Spindelkopf der Schraubspindel ein zu dem äußeren Mitnahmeprofil komplementäres inneres Mitnahmeprofil aufweist, wobei die Mitnahmeprofile axial miteinander koppelbar sind, um durch das Zusammenwirken der Mitnahmeprofile eine formschlüssige, drehfeste Verbindung des Spindelkopfes und des Befestigungselementes zu erzielen.

Auf diese Weise wird eine einfache und kompakte Losdrehsicherung der Schraubspindel erzielt. Das Befestigungselement kann beispielsweise einen Schaft mit einem als Außensechskant ausgebildeten Mitnahmeprofil aufweisen, der mit einem als Innensechskant ausgebildeten Mitnahmeprofil des Spindelkopfes der Schraubspindel fluchtend und drehmomentübertragend verbindbar ist. Alternativ kann das Befestigungselement beispielsweise einen Schaft mit einem als Innensechskant ausgebildeten Endabschnitt aufweisen, der mit einem als Außensechskant ausgebildeten Spindelkopf der Schraubspindel fluchtend und drehmomentübertragend verbindbar ist. Es versteht sich von selbst, dass es sich bei den vorgenannten Mitnahmeprofilen nicht zwangsläufig um Sechskantprofile handeln muss. Alternativ sind auch weitere Mitnahmeprofile, die eine drehmomentübertragende Kopplung zwischen dem Befestigungselement und dem Spindelkopf ermöglichen, denkbar (z.B. ovale, dreieckige, viereckige oder vieleckige Mitnahmeprofile).

In einer weiteren Ausgestaltung des Nivellierschuhs gemäß dem ersten Aspekt der Erfindung ist vorgesehen, dass der Nivellierschuh des Weiteren ein Spannelement zum Verspannen der Grundplatte, der Kopfplatte und des Keilelements aufweist, wobei das Spannelement in der Form eines Bolzens mit einem Spannbolzenkopf und einem Spannbolzenschaft ausgebildet ist, wobei das Spannelement von einer Seite der Bodenfläche durch die Grundplatte geführt ist und mit dem Spannbolzenkopf an der Grundplatte aufliegt, wobei in dem Spannbolzenschaft ein Langloch ausgebildet ist und die Schraubspindel durch das Langloch geführt ist, und wobei an einem dem Spannbolzenkopf entgegengesetzten Ende des Spannbolzenschafts ein Spanngewinde ausgebildet ist, so dass durch ein Verschrauben des Spanngewindes mit einem Gegenelement ein Verspannen bewirkt werden kann.

Ein Verspannen des Nivellierschuhs ist wichtig, um ein noch vorhandenes Spiel zwischen der Kopfplatte, der Grundplatte und dem Keilelement zu beseitigen und die dynamischen Eigenschaften des Nivellierschuhs zu verbessern. Hierzu werden die Kopfplatte, die Grundplatte und das Keilelement in der Betriebsposition in vertikaler Richtung, d.h. senkrecht zu einer Längsachse der Schraubspindel und/oder senkrecht zu der Standfläche der Kopfplatte verspannt. Daher ist ein Spannelement vorgesehen, das wie vorgeschlagen von der Seite der Bodenfläche durch die Bodenplatte, das Keilelement in die Grundplatte geführt ist. Mit einem Spannbolzenkopf liegt das Spannelement dabei an der Grundplatte an. Dabei ist unter "Anliegen" zu verstehen, dass der Spannbolzenkopf sowohl auf der Bodenfläche, als auch in einem in der Bodenfläche ausgebildeten Sackloch anliegen kann. Der Spannbolzenkopf kann gemäß dem Begriff "Anliegen" sowohl direkt an der Bodenplatte anliegen, oder es können Zwischenelemente, etwa Sicherungsscheiben, angeordnet sein.

In einer Ausgestaltung des Nivellierschuhs gemäß dem zweiten Aspekt der Erfindung ist vorgesehen, dass die Kopfplatte zumindest eine sich zwischen der Standfläche und der zweiten Gleitfläche erstreckende Gewindebohrung zur Aufnahme der Sperreinrichtung aufweist, wobei die Sperreinrichtung ein in der zumindest einen Gewindebohrung drehbar gelagertes Befestigungselement ist, das zwischen einer Sperrstellung, in der das Befestigungselement an einer der zweiten Gleitfläche der Kopfplatte zugewandten Oberfläche des Keilelements anliegt, um das Keilelement zu fixieren, und einer Freigabestellung, in der das Befestigungselement von der der zweiten Gleitfläche der Kopfplatte zugewandten Oberfläche des Keilelements beabstandet ist, bewegbar ist.

In der Kopfplatte ist demnach zumindest eine Gewindebohrung vorgesehen, die sich von der Standfläche der Kopfplatte hin zu der zweiten Gleitfläche der Kopfplatte erstreckt. Das in der Gewindebohrung vorgesehene Innengewinde kann sich dabei über die gesamte Dicke der Kopfplatte oder lediglich über einen Bruchteil der Dicke der Kopfplatte erstrecken. Auf diese Weise kann das Keilelement nach erfolgter Nivellierung über die zumindest eine Gewindebohrung mittels des Befestigungselements reibschlüssig fixiert werden. Mit anderen Worten wird das Befestigungselement gegen die der zweiten Gleitfläche der Kopfplatte zugewandte Oberfläche des Keilelements gepresst. Die Positionierung der zumindest einen Gewindebohrung in der Kopfplatte ist vorzugsweise derart zu wählen, dass die Zugänglichkeit des Befestigungselements auch im eingebauten Zustand des Maschinenschuhes gewährleistet ist.

In einer Ausgestaltung des Nivellierschuhs gemäß dem zweiten Aspekt der Erfindung ist vorgesehen, dass der Nivellierschuh des Weiteren zumindest einen Vorsprung zur Aufnahme der Sperreinrichtung aufweist, wobei die Sperreinrichtung ein, insbesondere drehfest, in einer Durchgangsbohrung des zumindest einen Vorsprungs gelagertes Befestigungselement aufweist, das zwischen einer Sperrstellung, in der das Befestigungselement an einer parallel zu der Axialrichtung der Schraubspindel verlaufenden äußeren Seitenwand des Keilelements anliegt, um das Keilelement zu fixieren, und einer Freigabestellung, in der das Befestigungselement von der äußeren Seitenwand des Keilelements beabstandet ist, bewegbar ist.

Der zumindest eine Vorsprung kann beispielsweise lösbar oder unlösbar mit einer Druckverteilungsplatte verbunden und/oder einem den Nivellierschuh umgebenden Boden verbunden oder verbindbar sein. Diese Verbindung kann insbesondere formschlüssig, kraftschlüssig oder stoffschlüssig erfolgen. Vorzugsweise ist der zumindest eine Vorsprung mit der Druckverteilungsplatte und/oder dem Boden verschraubt oder verschweißt. An dem zumindest einen Vorsprung ist ein Befestigungselement, insbesondere eine Schraube, ein Bolzen, eine Gewindestange oder dergleichen, angebracht. Das Befestigungselement ist dabei derart an dem Vorsprung angebracht, dass es in, insbesondere reibschlüssige, Anlage mit der parallel zu der Axialrichtung der Schraubspindel verlaufenden äußeren Seitenwand des Keilelements bewegbar ist, um das Keilelement gegen ungewolltes Verschieben relativ zu der Kopfplatte und der Grundplatte zu fixieren.

Zur Fixierung des Keilelements genügt bereits ein einziger Vorsprung mit entsprechendem Befestigungselement. Vorzugsweise sind zwei Vorsprünge vorgesehen, wobei an jedem der beiden Vorsprünge jeweils ein derartiges Befestigungselement zur Fixierung des Keilelements angebracht ist, und wobei die Vorsprünge jeweils an zwei gegenüberliegenden Seitenwänden des Keilelements angeordnet sind. Auf diese Weise kann das Keilelement, insbesondere symmetrisch, entlang seiner parallel zu der Axialrichtung der Schraubspindel verlaufenden äußeren Seitenwände fixiert werden.

In einer Ausgestaltung des Nivellierschuhs gemäß dem zweiten Aspekt der Erfindung ist vorgesehen, dass der Nivellierschuh des Weiteren eine Druckverteilungsplatte aufweist, die mit der Bodenfläche der Grundplatte verbunden ist und den zumindest einen Vorsprung aufweist.

Die Druckverteilungsplatte kann mit einer Fläche versehen sein, die größer als die der Grundplatte ist. Auf diese Weise wird es möglich, den auf den Nivellierschuh lastenden Druck über einen größeren Bereich des Bodens zu verteilen. Insbesondere in der Ausgestaltung mit dem elastischen Element zur Schwingungsentkopplung kann dann vorgesehen sein, dass die Druckverteilungsplatte zwischen dem Boden und dem zumindest einen elastischen Element auf einer Seite der Grundplatte angeordnet ist. Die Druckverteilungsplatte ist vorzugsweise aus Metall ausgebildet. Alternativ kann die Druckverteilungsplatte auch aus einem nicht-metallischen Werkstoff bestehen. Auch Verbundwerkstoffe sind denkbar. Der Vorsprung kann lösbar oder unlösbar mit der Druckverteilungsplatte verbunden sein. Diese Verbindung kann insbesondere formschlüssig, kraftschlüssig oder stoffschlüssig ausgebildet sein.

In einer weiteren Ausgestaltung des Nivellierschuhs gemäß dem zweiten Aspekt der Erfindung ist vorgesehen, dass der zumindest eine Vorsprung sich parallel zu der Axialrichtung der Schraubspindel erstreckt und derart ausgebildet ist, dass das Befestigungselement über sämtliche Nivellierbiereiche des Nivellierschuhs mit der äußeren Seitenwand des Keilelements fixierbar ist.

Um eine ungewollte Bewegung des Keilelements relativ zu der Bodenplatte und der Kopfplatte zu vermeiden, ist sicherzustellen, dass das Befestigungselement über den gesamten Arbeitsbereich des Nivellierschuhs mit der äußeren Seitenwand des Keilelements in Anlage gebracht werden kann, um das Keilelement zu fixieren. Beispielsweise kann die Durchgangsbohrung derart in dem Vorsprung und relativ zu dem Keilelement angeordnet sein, dass das in der Durchgangsbohrung gelagerte Befestigungselement über den gesamten Arbeitsbereich des Nivellierschuhs mit der äußeren Seitenwand des Keilelements in Anlage gebracht werden kann. Auf diese Weise wird eine flexible Fixierung des Keilelements ermöglicht.

In einer Ausgestaltung des Nivellierschuhs gemäß dem zweiten Aspekt der Erfindung ist vorgesehen, dass der Nivellierschuh des Weiteren zumindest einen Vorsprung mit einem Langloch zur Aufnahme der Sperreinrichtung aufweist, wobei die Sperreinrichtung ein, insbesondere drehfest, in dem Langloch des zumindest einen Vorsprungs gelagertes Befestigungselement aufweist, das mit einer in einer parallel zu der Axialrichtung der Schraubspindel verlaufenden äußeren Seitenwand des Keilelements vorgesehenen Gewindebohrung verschraubbar ist.

Das Langloch ist notwendig, um eine sich während des Nivellierens einstellende horizontale und/oder vertikale Bewegung des Keilelements relativ zu dem, insbesondere ortsfest an einer Druckverteilungsplatte und/oder einem den Nivellierschuh umgebenden Boden, angebrachten oder anbringbaren Vorsprung auszugleichen. Das Langloch gleicht diese Relativbewegung aus, indem es eine Nachführung bzw. Anpassung des mit der Seitenwand des Keilelements verschraubten Befestigungselements an den Nivellierbereich des Nivellierschuhs ermöglicht. Das Langloch kann dabei unterschiedliche Orientierungen aufweisen. Beispielsweise kann sich das Langloch parallel zu der Axialrichtung der Schraubspindel erstrecken. Alternativ kann sich das Langloch auch parallel zu der ersten Gleitfläche der Grundplatte erstrecken.

In einer Ausgestaltung des Nivellierschuhs gemäß dem zweiten Aspekt der Erfindung ist vorgesehen, dass der Nivellierschuh des Weiteren eine Druckverteilungsplatte aufweist, die mit der Bodenfläche der Grundplatte verbunden ist und den zumindest einen Vorsprung aufweist.

Die Druckverteilungsplatte kann mit einer Fläche versehen sein, die größer als die der Grundplatte ist. Auf diese Weise wird es möglich, den auf den Nivellierschuh lastenden Druck über einen größeren Bereich des Bodens zu verteilen. Insbesondere in der Ausgestaltung mit dem elastischen Element zur Schwingungsentkopplung kann dann vorgesehen sein, dass die Druckverteilungsplatte zwischen dem Boden und dem zumindest einen elastischen Element auf einer Seite der Grundplatte angeordnet ist. Die Druckverteilungsplatte ist vorzugsweise aus Metall ausgebildet. Alternativ kann die Druckverteilungsplatte auch aus einem nicht-metallischen Werkstoff bestehen. Auch Verbundwerkstoffe sind denkbar. Der Vorsprung kann lösbar oder unlösbar mit der Druckverteilungsplatte verbunden sein. Diese Verbindung kann insbesondere formschlüssig, kraftschlüssig oder stoffschlüssig ausgebildet sein.

In einer weiteren Ausgestaltung des Nivellierschuhs gemäß dem zweiten Aspekt der Erfindung ist vorgesehen, dass eine Breite des Langlochs größer als ein Durchmesser des Befestigungselements ist, derart, dass das Befestigungselement über sämtliche Nivellierbiereiche des Nivellierschuhs mit der äußeren Seitenwand des Keilelements verschraubbar ist.

Als "Breite des Langlochs" wird der Abstand zwischen den parallel zueinander verlaufenden Längsseiten des Langlochs verstanden. Dieser Abstand entspricht gerade dem Durchmesser der durch Halbkreise abgeschlossenen schmalen Seiten des Langlochs. Zwischen dem Langloch und dem Befestigungselement ist mit anderen Worten ein Spiel vorgesehen, das eine Nachführung des Befestigungselements in Reaktion auf eine im Rahmen des Nivellierens aktuierte Bewegung des Keilelements relativ zu der Kopfplatte und der Bodenplatte ermöglicht.

In einer Ausgestaltung des Verfahrens gemäß dem dritten Aspekt der Erfindung ist vorgesehen, dass der Nivellierschuh des Weiteren eine an dem Keilelement befestigte Haltevorrichtung zur Aufnahme der Sperreinrichtung aufweist, wobei die Sperreinrichtung ein Befestigungselement ist, und wobei der Schritt des Sperrens des nivellierten Nivellierschuhs folgende Schritte aufweist:
- Drehmomentfestes Koppeln des Befestigungselements mit einem Spindelkopf der Schraubspindel, und
- Drehfestes Fixieren des mit dem Spindelkopf der Schraubspindel drehmomentfest gekoppelten Befestigungselements an der Haltevorrichtung.

Vorzugsweise erfolgt der Schritt des drehmomentfesten Koppelns des Befestigungselements mit dem Spindelkopf der Schraubspindel vor dem Schritt des drehfesten Fixierens des Befestigungselements an der Haltevorrichtung. Das Fixieren an der Haltevorrichtung kann beispielsweise mittels einer Kontermutter erfolgen, insbesondere durch Verspannen der Kontermutter und eines Kopfes des Befestigungselements gegen die Haltevorrichtung. Auf diese Weise wird eine optimale Nachführung des Befestigungselements in Reaktion auf eine im Rahmen des Nivellierens aktuierte Bewegung des Keilelements relativ zu der Kopfplatte und der Bodenplatte ermöglicht.

In einer weiteren Ausgestaltung des Verfahrens gemäß dem dritten Aspekt der Erfindung ist vorgesehen, dass das mit dem Spindelkopf der Schraubspindel drehmomentfest gekoppelte und an der Haltevorrichtung fixierte Befestigungselement sich koaxial zu der Schraubspindel durch eine Durchgangsbohrung der Haltevorrichtung hindurch erstreckt.

Die koaxiale Anordnung des Befestigungselements und der Schraubspindel ermöglicht eine einfache und kompakte Kopplung der beiden Elemente. Alternativ kann das Befestigungselement auch exzentrisch zu der Schraubspindel angeordnet sein.

In einer weiteren Ausgestaltung des Verfahrens gemäß dem dritten Aspekt der Erfindung ist vorgesehen, dass der Nivellierschuh des Weiteren einen Vorsprung zur Aufnahme der Sperreinrichtung aufweist, wobei die Sperreinrichtung ein Befestigungselement ist, und wobei der Schritt des Sperrens des nivellierten Nivellierschuhs ein drehmomentübertragendes Koppeln des Befestigungselements mit einem Spindelkopf der Schraubspindel und ein drehfestes Fixieren des mit dem Spindelkopf der Schraubspindel drehmomentfest gekoppelten Befestigungselements an dem Vorsprung aufweist.

Der Vorsprung kann beispielsweise lösbar oder unlösbar mit einer Druckverteilungsplatte oder einem den Nivellierschuh umgebenden Boden verbunden sein. Diese Verbindung kann insbesondere formschlüssig, kraftschlüssig oder stoffschlüssig ausgebildet sein. Zum Sperren des zuvor nivellierten Nivellierschuhs wird das Befestigungselement mit dem Spindelkopf der Schraubspindel drehmomentübertragend gekoppelt und anschließend, insbesondere mittels einer Kontermutter, an dem Vorsprung befestigt. Bei dem Befestigungselement handelt es sich vorzugsweise um eine Schraube, eine Gewindestange, einen Bolzen oder dergleichen.

In einer weiteren Ausgestaltung des Verfahrens gemäß dem dritten Aspekt der Erfindung ist vorgesehen, dass der Nivellierschuh des Weiteren eine Druckverteilungsplatte aufweist, die mit der Bodenfläche der Grundplatte verbunden ist und den Vorsprung aufweist.

In einer weiteren Ausgestaltung des Verfahrens gemäß dem dritten Aspekt der Erfindung ist vorgesehen, dass das mit dem Spindelkopf der Schraubspindel drehmomentfest gekoppelte und an dem Vorsprung fixierte Befestigungselement sich koaxial zu der Schraubspindel durch eine Durchgangsbohrung des Vorsprungs hindurch erstreckt.

Die koaxiale Anordnung des Befestigungselements und der Schraubspindel ermöglicht eine einfache und kompakte Kopplung der beiden Elemente. Alternativ kann das Befestigungselement auch exzentrisch zu der Schraubspindel angeordnet sein.

In einer weiteren Ausgestaltung des Verfahrens gemäß dem dritten Aspekt der Erfindung ist vorgesehen, dass das Befestigungselement ein äußeres Mitnahmeprofil und der Spindelkopf der Schraubspindel ein zu dem äußeren Mitnahmeprofil komplementäres inneres Mitnahmeprofil aufweist, wobei die Mitnahmeprofile zum Sperren des nivellierten Nivellierschuhs axial miteinander gekoppelt werden, um durch das Zusammenwirken der Mitnahmeprofile eine formschlüssige, drehfeste Verbindung des Spindelkopfes und des Befestigungselements zu erzielen.

Auf diese Weise wird eine einfache und kompakte Losdrehsicherung der Schraubspindel erzielt. Das Befestigungselement kann beispielsweise einen Schaft mit einem als Außensechskant ausgebildeten Mitnahmeprofil aufweisen, der mit einem als Innensechskant ausgebildeten Mitnahmeprofil des Spindelkopfes der Schraubspindel fluchtend und drehmomentübertragend verbindbar ist. Alternativ kann das Befestigungselement beispielsweise einen Schaft mit einem als Innensechskant ausgebildeten Endabschnitt aufweisen, der mit einem als Außensechskant ausgebildeten Spindelkopf der Schraubspindel fluchtend und drehmomentübertragend verbindbar ist. Es versteht sich von selbst, dass es sich bei den vorgenannten Mitnahmeprofilen nicht zwangsläufig um Sechskantprofile handeln muss. Alternativ sind auch weitere Mitnahmeprofile, die eine drehmomentübertragende Kopplung zwischen dem Befestigungselement und dem Spindelkopf ermöglichen, denkbar (z.B. ovale, dreieckige, viereckige oder vieleckige Mitnahmeprofile).

In einer weiteren Ausgestaltung des Verfahrens gemäß dem dritten Aspekt der Erfindung ist vorgesehen, dass das Verfahren des Weiteren einen Schritt des Durchführens eines Spannelements aufweist, das die Form eines Bolzens mit einem Spannbolzenkopf und einem Spannbolzenschaft aufweist, wobei der Spannbolzenschaft ein Langloch zur Durchführung der Schraubspindel aufweist, von einer Seite der Bodenfläche durch die Grundplatte.

Auf diese Weise kann auch bei dem Verfahren gemäß dem dritten Aspekt der Erfindung ein Verspannen des Nivellierschuhs bereitgestellt werden, wie dies in einer der zuvor genannten Ausgestaltung des Nivellierschuhs der Erfindung voranstehend beschrieben wurde. Damit können ebenfalls die entsprechenden Vorteile bereitgestellt werden.

In einer weiteren Ausgestaltung des Verfahrens gemäß dem vierten Aspekt der Erfindung ist vorgesehen, dass die Kopfplatte zumindest eine sich zwischen der Standfläche und der zweiten Gleitfläche erstreckende Gewindebohrung zur Aufnahme der Sperreinrichtung aufweist, wobei die Sperreinrichtung ein Befestigungselement ist, und wobei das Sperren des nivellierten Nivellierschuhs durch Verschrauben des Befestigungselements durch die Gewindebohrung und gegen eine der zweiten Gleitfläche der Kopfplatte zugewandte Oberfläche des Keilelements erfolgt.

In der Kopfplatte ist demnach zumindest eine Gewindebohrung vorgesehen, die sich von der Standfläche der Kopfplatte hin zu der zweiten Gleitfläche der Kopfplatte erstreckt. Das in der Gewindebohrung vorgesehene Innengewinde kann sich dabei über die gesamte Dicke der Kopfplatte oder lediglich über einen Bruchteil der Dicke der Kopfplatte erstrecken. Auf diese Weise kann das Keilelement nach erfolgter Nivellierung über die zumindest eine Gewindebohrung mittels des Befestigungselements reibschlüssig fixiert werden. Mit anderen Worten wird das Befestigungselement gegen die der zweiten Gleitfläche der Kopfplatte zugewandte Oberfläche des Keilelements gepresst. Die Positionierung der zumindest einen Gewindebohrung in der Kopfplatte ist vorzugsweise derart zu wählen, dass die Zugänglichkeit des Befestigungselements auch im eingebauten Zustand des Maschinenschuhes gewährleistet ist.

In einer weiteren Ausgestaltung des Verfahrens gemäß dem vierten Aspekt der Erfindung ist vorgesehen, dass der Nivellierschuh des Weiteren zumindest einen Vorsprung mit einer Durchgangsbohrung zur Aufnahme der Sperreinrichtung aufweist, wobei die Sperreinrichtung ein Befestigungselement ist, das zum Sperren des nivellierten Nivellierschuhs mit einer parallel zu der Axialrichtung der Schraubspindel verlaufenden äußeren Seitenwand des Keilelements reibschlüssig in Kontakt gebracht wird, insbesondere und an dem Vorsprung drehfest fixiert wird.

Der zumindest eine Vorsprung kann lösbar oder unlösbar mit einer Druckverteilungsplatte und/oder einem den Nivellierschuh umgebenden Boden verbunden sein. Diese Verbindung kann insbesondere formschlüssig, kraftschlüssig oder stoffschlüssig erfolgen. Vorzugsweise ist der zumindest eine Vorsprung mit der Druckverteilungsplatte und/oder dem Boden verschraubt oder verschweißt. Das Befestigungselement kann beispielsweise eine Schraube, ein Bolzen, eine Gewindestange oder dergleichen sein. Das Befestigungselement wird zum Vermeiden eines ungewollten Verschiebens des Keilelements relativ zu der Kopfplatte und der Grundplatte in reibschlüssigen Kontakt mit der äußeren Seitenwand des Keilelements verbracht. Aus Symmetriegründen können auch zwei Vorsprünge vorgesehen sein, wobei an jedem der beiden Vorsprünge jeweils ein derartiges Befestigungselement zur Fixierung des Keilelements angebracht ist, und wobei die Vorsprünge jeweils an zwei gegenüberliegenden Seitenwänden des Keilelements angeordnet sind. Auf diese Weise kann das Keilelement entlang seiner parallel zu der Axialrichtung der Schraubspindel verlaufenden äußeren Seitenwände fixiert werden.

In einer weiteren Ausgestaltung des Verfahrens gemäß dem vierten Aspekt der Erfindung ist vorgesehen, dass der Nivellierschuh des Weiteren eine Druckverteilungsplatte aufweist, die mit der Bodenfläche der Grundplatte verbunden ist und den zumindest einen Vorsprung aufweist.

In einer weiteren Ausgestaltung des Verfahrens gemäß dem vierten Aspekt der Erfindung ist vorgesehen, dass der zumindest eine Vorsprung derart ausgebildet ist, dass das Befestigungselement über sämtliche Nivellierbiereiche des Nivellierschuhs mit der äußeren Seitenwand des Keilelements fixierbar ist.

Um eine ungewollte Bewegung des Keilelements relativ zu der Bodenplatte und der Kopfplatte zu vermeiden, ist sicherzustellen, dass das Befestigungselement über den gesamten Arbeitsbereich des Nivellierschuhs mit der äußeren Seitenwand des Keilelements in Anlage gebracht werden kann, um das Keilelement zu fixieren. Beispielsweise kann die Durchgangsbohrung derart in dem Vorsprung und relativ zu dem Keilelement angeordnet sein, dass das in der Durchgangsbohrung gelagerte Befestigungselement über den gesamten Arbeitsbereich des Nivellierschuhs mit der äußeren Seitenwand des Keilelements in Anlage gebracht werden kann. Auf diese Weise wird eine flexible Fixierung des Keilelements ermöglicht.

In einer weiteren Ausgestaltung des Verfahrens gemäß dem vierten Aspekt der Erfindung ist vorgesehen, dass der Nivellierschuh des Weiteren eine mit der Bodenfläche der Grundplatte verbundene Druckverteilungsplatte mit zumindest einem Vorsprung mit einem Langloch zur Aufnahme der Sperreinrichtung aufweist, wobei die Sperreinrichtung ein Befestigungselement ist, das zum Sperren des nivellierten Nivellierschuhs durch das Langloch geführt und mit einer in einer parallel zu der Axialrichtung der Schraubspindel verlaufenden äußeren Seitenwand des Keilelements vorgesehenen Gewindebohrung verschraubt wird, insbesondere und an dem Vorsprung drehfest fixiert wird.

Das Langloch ist notwendig, um eine sich während des Nivellierens einstellende horizontale und/oder vertikale Bewegung des Keilelements relativ zu dem ortsfest an der Druckverteilungsplatte angebrachten Vorsprung auszugleichen. Das Langloch gleicht diese Relativbewegung aus, indem es eine Nachführung bzw. Anpassung des mit der Seitenwand des Keilelements verschraubten Befestigungselements an den Nivellierbereich des Nivellierschuhs ermöglicht. Das Langloch kann dabei unterschiedliche Orientierungen aufweisen. Beispielsweise kann sich das Langloch parallel zu der Axialrichtung der Schraubspindel erstrecken. Alternativ kann sich das Langloch auch parallel zu der ersten Gleitfläche der Grundplatte erstrecken.

In einer weiteren Ausgestaltung des Verfahrens gemäß dem vierten Aspekt der Erfindung ist vorgesehen, dass eine Breite des Langlochs größer als ein Durchmesser des Befestigungselements ist, derart, dass das Befestigungselement über sämtliche Nivellierbiereiche des Nivellierschuhs mit der äußeren Seitenwand des Keilelements verschraubbar ist.

Zwischen dem Langloch und dem Befestigungselement ist mit anderen Worten ein Spiel vorgesehen, das eine Nachführung des Befestigungselements in Reaktion auf eine im Rahmen des Nivellierens aktuierte Bewegung des Keilelements relativ zu der Kopfplatte und der Bodenplatte ermöglicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines Nivellierschuhs gemäß einem ersten Aspekt,
- Fig. 2a-2d: Ansichten einer Ausführungsform des Nivellierschuhs gemäß einem zweiten Aspekt,
- Fig. 3a-3d: Ansichten einer weiteren Ausführungsform des Nivellierschuhs gemäß einem dritten Aspekt,
- Fig. 4a-4d: Ansichten einer weiteren Ausführungsform des Nivellierschuhs gemäß einem vierten Aspekt,
- Fig. 5a-5d: Ansichten einer weiteren Ausführungsform des Nivellierschuhs gemäß einem fünften Aspekt,
- Fig. 6a-6d: Ansichten einer weiteren Ausführungsform des Nivellierschuhs gemäß einem sechsten Aspekt, und
- Fig. 7: ein schematisches Ablaufdiagramm eines Verfahrens zum Montieren des Nivellierschuhs gemäß einem siebten Aspekt.

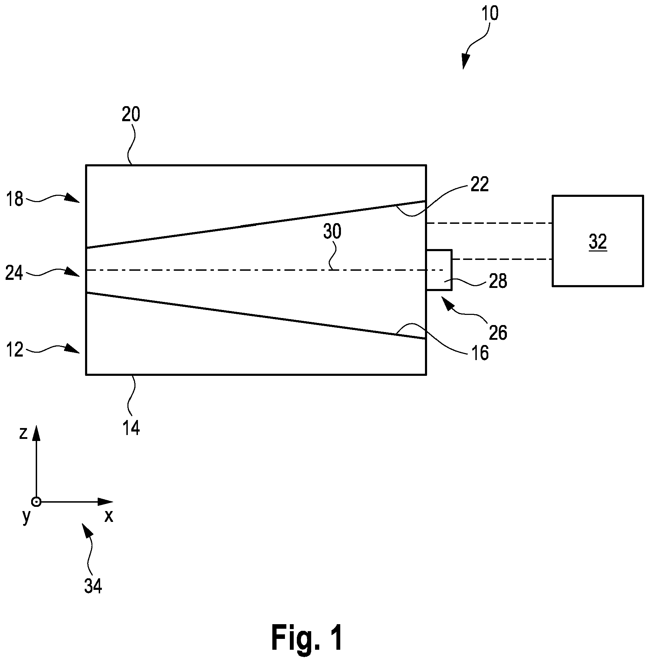

Die Fig. 1 zeigt eine schematische Ansicht eines Nivellierschuhs 10 gemäß dem ersten Aspekt der Erfindung. Der Nivellierschuh 10 weist eine Grundplatte 12 auf, die eine Bodenfläche 14 und eine erste Gleitfläche 16 aufweist. Des Weiteren weist der Nivellierschuh 10 eine Kopfplatte 18 auf, die eine Standfläche 20, auf der eine zu lagernde Maschine bzw. Anlage (nicht dargestellt) aufgesetzt werden soll, und eine zweite Gleitfläche 22 aufweist. An der Bodenfläche 14 kann ein Dämpfungselement (nicht dargestellt), etwa ein Elastomer, zur Schwingungsdämpfung angeordnet sein. Zwischen der Grundplatte 12 und der Kopfplatte 18 ist ein Keilelement 24 anliegend an der ersten Gleitfläche 16 und der zweiten Gleitfläche 22 angeordnet. In dem Keilelement 24 ist stirnseitig eine Durchgangsbohrung (nicht dargestellt) vorgesehen. Durch die Durchgangsbohrung ist eine Schraubspindel 26 geführt. Die Schraubspindel 26 liegt mit einem Spindelkopf 28 an dem Keilelement 24 an. Mittels des Spindelkopfs 28 kann die Schraubspindel 26 von einer Bedienperson per Hand oder mittels eines geeigneten Werkzeugs gedreht werden. Mittels einer Spindelmutter (nicht dargestellt), die auf die Schraubspindel 26 aufgeschraubt ist, kann die Schraubspindel 26 in einer Axialrichtung 30 der Schraubspindel 26 relativ zu dem Keilelement 24 festgelegt werden, so dass die Schraubspindel in der Axialrichtung 42 nicht relativ zu dem Keilelement 24 bewegbar ist. Der Nivellierschuh 10 weist des Weiteren eine Sperreinrichtung 32 auf. Die Sperreinrichtung 32 ist dazu ausgebildet, ein Verschieben des Keilelements 24 relativ zu der Kopfplatte 18 und der Grundplatte 12 zu vermeiden. Die in der Fig. 1 dargestellten gestrichelten Verbindungslinien zwischen der Sperreinrichtung 23 und dem Keilelement 24 bzw. der Schraubspindel 26 deuten an, dass die Sperreinrichtung 32 zum Vermeiden des Verschiebens des Keilelements 24 relativ zu der Kopfplatte 18 und der Grundplatte 12 vorzugsweise mit dem Keilelement 24 und/oder der Schraubspindel 26 wechselwirkt.

Um die nachfolgenden Richtungsangaben zu vereinfachen, ist ein (kartesisches) Koordinatensystem 34 mit einer X-Achse, die parallel zu der Axialrichtung 30 verläuft, und einer Y-Achse sowie einer Z-Achse dargestellt. Die Y-Achse ist aufgrund der zweidimensionalen Darstellung des Nivellierschuhs 10 als Punkt dargestellt und erstreckt sich senkrecht zu der X-Achse und der Z-Achse. In einer Betriebsposition des Nivellierschuhs 10 entspricht die Z-Achse einer vertikalen Richtung, während die X-Achse und die Y-Achse einer Horizontalebene aufspannen. Der Nivellierschuh 10 ist dazu vorgesehen, einen Höhenausgleich parallel zu der Z-Achse bereitzustellen. Dabei ist das Keilelement 24 relativ zu der Grundplatte 12 und der Kopfplatte 18 in der Axialrichtung 30 bewegbar. Aufgrund seiner Keilform bewirkt das Keilelement somit eine Relativbewegung der Kopfplatte 18 zu der Grundplatte 12 parallel zu der Z-Achse bzw. in Vertikalrichtung. Auf diese Weise kann mittels einer Drehung an dem Spindelkopf 28 eine Nivellierung vorgenommen werden.

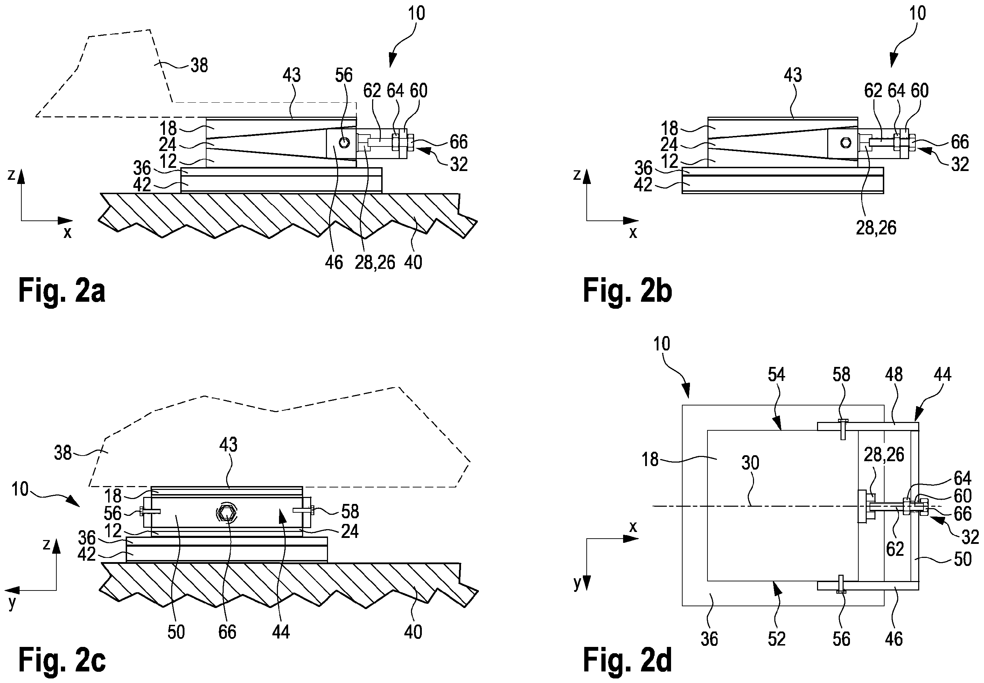

Die Fig. 2a bis 2d zeigen Ansichten einer Ausführungsform des Nivellierschuhs 10 gemäß dem zweiten Aspekt der Erfindung. Gleiche Elemente sind mit gleichen Bezugszeichen gekennzeichnet.

In der dargestellten Ausführungsform ist optional eine, insbesondere metallische, Druckverteilungsplatte 36 vorgesehen, die einen auf den Nivellierschuh 10 beaufschlagten Druck bzw. eine Last der Maschine bzw. Anlage 38 auf einen größeren Bereich des Bodens 40 verteilt. Um diese Anbringungsart elastisch zu entkoppeln, kann zwischen dem Boden 40 und der Druckverteilungsplatte 36 ein elastisches Element 42 angeordnet sein. Die Druckverteilungsplatte 40 ist vorzugsweise gemeinsam mit der Grundplatte 12 und dem elastischen Element 42 in dem Boden 40 verschraubt. Auf diese Weise kann der Nivellierschuh 10 bzw. die Grundplatte 12 des Nivellierschuhs 10 schwingungstechnisch vom Boden 40 entkoppelt werden. Optional kann auch zwischen der Kopfplatte 18 und der Maschine bzw. Anlage 38 ein elastisches Element 43 vorgesehen sein. Die Druckverteilungsplatte 36 ist mit einer Fläche versehen, die größer als die der Grundplatte 12 ist.

Der Nivellierschuh 10 weist in der dargestellten Ausführungsform des Weiteren eine Haltevorrichtung 44 auf. Die Haltevorrichtung 44 weist ein U-förmiges oder C-förmiges Querschnittsprofil mit parallel zu der Axialrichtung 30 der Spindelschraube 26 verlaufenden freien Enden 46, 48 und einem sich zwischen den freien Enden 46, 48 erstreckenden Quersteg 50 auf. Die freien Enden 46, 48 der Haltevorrichtung 44 sind mit zwei gegenüberliegenden, parallel zu der Axialrichtung 30 verlaufenden äußeren Seitenwänden 52, 54 des Keilelements 24 mittels zweier Schrauben 56, 58 verschraubt. Die Haltevorrichtung 44 ist derart mit dem Keilelement 24 verbunden, dass der Quersteg 50 sich in der dargestellten Ausführungsform parallel zu der Y-Achse erstreckt. In dem Quersteg 50 ist eine Durchgangsbohrung 60 vorgesehen. Durch die Durchgangsbohrung 60 ist die Sperreinrichtung 32 geführt. Die Sperreinrichtung 32 ist vorzugsweise ein Befestigungselement, bspw. eine Schraube, eine Gewindestange, ein Bolzen oder dergleichen. Ein Schaft 62 der Sperreinrichtung 32 ist drehmomentfest mit dem Spindelkopf 28 der Schraubspindel 26 gekoppelt. Der Schaft 62 kann beispielsweise ein als Außensechskant ausgebildetes Mitnahmeprofil aufweisen, das mit einem als Innensechskant ausgebildeten Mitnahmeprofil des Spindelkopfes 28 der Schraubspindel 26 fluchtend und drehmomentübertragend verbindbar ist. Es versteht sich von selbst, dass es sich bei den vorgenannten Mitnahmeprofilen nicht zwangsläufig um Sechskantprofile handeln muss. Alternativ sind auch andere Mitnahmeprofile, die eine drehmomentübertragende Kopplung zwischen der Sperreinrichtung 32 und dem Spindelkopf 26 ermöglichen, denkbar, bspw. ovale, dreieckige, viereckige oder vieleckige Mitnahmeprofile.

Die Sperreinrichtung 32 ist dabei drehfest an der Haltevorrichtung 44 angebracht. Die drehfeste Anbringung der Sperreinrichtung 32 an der Haltevorrichtung 44 erfolgt in der dargestellten Ausführungsform mittels einer Kontermutter 64. Dabei kann mittels der Kontermutter 64, die auf den Schaft 62 der Sperreinrichtung 32 aufgeschraubt ist, die Sperreinrichtung 32 relativ zu der Haltevorrichtung 44 festgelegt werden, insbesondere durch Verspannen der Kontermutter 64 und eines Kopfes 66 der Sperreinrichtung 32 gegen die Haltevorrichtung 44.

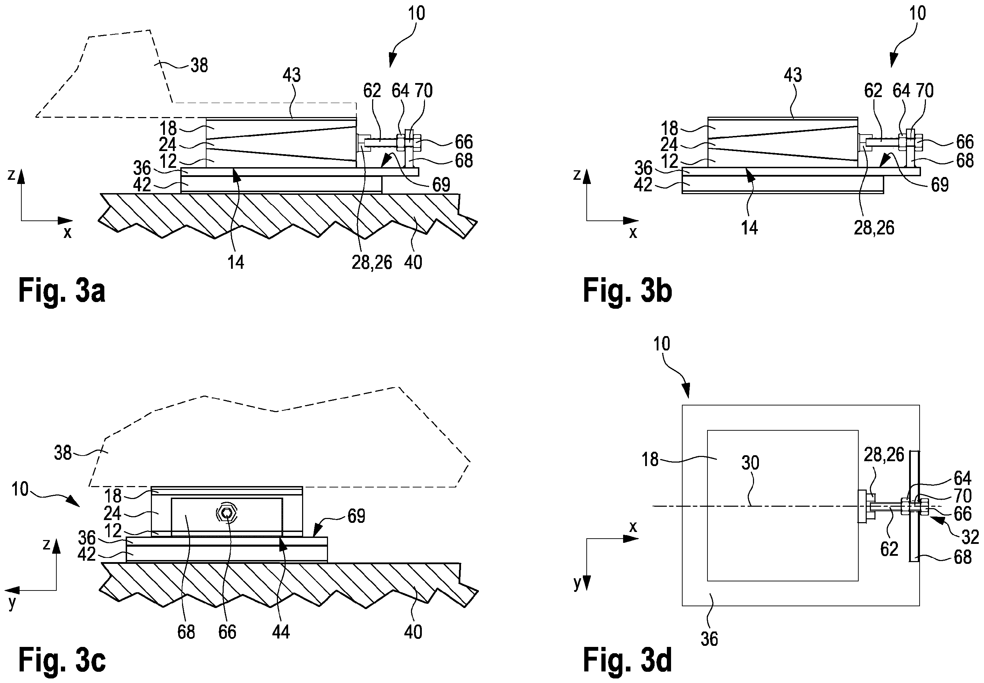

Die Fig. 3a bis 3d zeigen Ansichten einer weiteren Ausführungsform des Nivellierschuhs 10 gemäß dem dritten Aspekt der Erfindung. Gleiche Elemente sind mit gleichen Bezugszeichen gekennzeichnet, im Folgenden wird lediglich auf die Unterschiede eingegangen.

In der dargestellten Ausführungsform weist der Nivellierschuh 10 anstelle einer Haltevorrichtung einen mit der Druckverteilungsplatte 42 fest verbundenen Vorsprung 68 auf. Der Vorsprung 68 erstreckt sich relativ zu einer der Bodenfläche 14 zugewandten Oberfläche 69 der Druckverteilungsplatte 36 parallel zu der Z-Achse "nach oben", d.h. in positive Z-Richtung. Des Weiteren erstreckt sich der Vorsprung 68 parallel zu der Y-Achse. Es ist jedoch auch möglich, den Vorsprung 68 anstatt mit der Druckverteilungsplatte 42 mit einem den Nivellierschuh umgebenden Boden zu verbinden. Auch eine Verbindung mit sowohl der Druckverteilungsplatte als auch dem die Druckverteilungsplatte umgebenden Boden ist möglich. In dem Vorsprung 68 ist des Weiteren eine Durchgangsbohrung 70 vorgesehen. Durch die Durchgangsbohrung 70 ist die Sperreinrichtung 32 geführt. Die Sperreinrichtung 32 ist vorzugsweise ein Befestigungselement, bspw. eine Schraube, eine Gewindestange, ein Bolzen oder dergleichen. Der Schaft 62 der Sperreinrichtung 32 ist drehmomentfest mit dem Spindelkopf 28 der Schraubspindel 26 gekoppelt. Der Schaft 62 kann beispielsweise ein als Außensechskant ausgebildetes Mitnahmeprofil aufweisen, das mit einem als Innensechskant ausgebildeten Mitnahmeprofil des Spindelkopfes 28 der Schraubspindel 26 fluchtend und drehmomentübertragend verbindbar ist. Es versteht sich von selbst, dass es sich bei den vorgenannten Mitnahmeprofilen nicht zwangsläufig um Sechskantprofile handeln muss. Alternativ sind auch andere Mitnahmeprofile, die eine drehmomentübertragende Kopplung zwischen der Sperreinrichtung 32 und dem Spindelkopf 26 ermöglichen, denkbar, bspw. ovale, dreieckige, viereckige oder vieleckige Mitnahmeprofile.

Die Sperreinrichtung 32 ist dabei drehfest an dem Vorsprung 68 angebracht. Die drehfeste Anbringung der Sperreinrichtung 32 an dem Vorsprung 68 erfolgt in der dargestellten Ausführungsform mittels der Kontermutter 64, die auf den Schaft 62 der Sperreinrichtung 32 geschraubt ist, insbesondere durch Verspannen der Kontermutter 64 und des Kopfes 66 der Sperreinrichtung 32 gegen den Vorsprung 68.

Des Weiteren kann in der Ausgestaltung gemäß dem zweiten und/oder dem dritten Aspekt vorgesehen sein, dass der Nivellierschuh 10 des Weiteren ein Spannelement (nicht dargestellt) zum Verspannen der Grundplatte 12, der Kopfplatte 18 und des Keilelements 24 aufweist. Ein derartiges Spannelement kann beispielsweise in Form eines Bolzens mit einem Spannbolzenkopf und einem Spannbolzenschaft ausgebildet sein. Der Spannbolzenkopf und der Spannbolzenschaft sind fest miteinander verbunden. Der Spannbolzenkopf ist vorzugsweise in die Grundplatte 12 versenkt. Hierzu weist die Grundplatte 12 eine entsprechend ausgestaltete Spanndurchgangsbohrung (nicht dargestellt) auf. Eine entsprechende Spanndurchgangsbohrung ist auch in der Kopfplatte 18 vorgesehen. In dem Spannbolzenschaft ist vorzugsweise ein Langloch ausgebildet, durch das die Schraubspindel 26 geführt werden kann. Wie bereits voranstehend ausgeführt wurde, ist das in dem Spannbolzenschaft vorgesehene Langloch notwendig, um während des Nivellierungsvorgangs die Möglichkeit einer Bewegung der Schraubspindel 26 relativ zu dem Spannelement bereitzustellen, so dass der Nivelliervorgang durchgeführt werden kann.

Wird etwa das Keilelement 24 in positive Z-Richtung, d.h. "nach oben" nivelliert, bewegt sich auch die Schraubspindel 26 nach oben. Da der Spannbolzenkopf an der Grundplatte 12 anliegt, bleibt der Spannbolzenschaft jedoch stehen. Somit ist das Langloch notwendig, um eine Bewegung des Keilelements 24 und der Kopfplatte 18 parallel zu der Z-Achse relativ zu der Grundplatte 12 zu ermöglichen. Das Langloch weist vorzugsweise eine im Wesentlichen ovale Form auf. Der Spannbolzenschaft ist entsprechend oval aufgeweitet. Diese Ausführungsform ist jedoch ebenfalls lediglich beispielhaft zu verstehen, entsprechend andere geeignete Formen des Langlochs und des Spannbolzenschafts sind selbstverständlich denkbar.

An einem dem Spannbolzenkopf entgegengesetzten Ende des Spannbolzenschafts ist ein Spanngewinde in dem Spannbolzenschaft ausgebildet. Vorzugsweise ist das Spanngewinde ein Innengewinde, es kann jedoch auch ein Außengewinde sein. Somit ist es möglich, eine Maschine bzw. Anlage 38 mit dem Nivellierschuh 10 zu verschrauben und an dem Nivellierschuh 10 zu befestigen und dabei gleichzeitig den Nivellierschuh 10 zu verspannen. Durch ein Verschrauben der Maschine bzw. Anlage 38 mit dem Spanngewinde wird das Spannelement in positive Z-Richtung, d.h. "nach oben" gezogen. Aufgrund des an der Grundplatte 12 anliegenden Spannbolzenkopfs werden so die Grundplatte 12, das Keilelement 24 und die Kopfplatte 18 miteinander parallel zu der Z-Achse verspannt. Auf diese Weise wird aus dem Nivellierschuh 10 jegliches noch bestehendes Spiel herausgenommen und die dynamischen Eigenschaften des Nivellierschuhs 10 so wesentlich verbessert.

Für weitere Erläuterungen bezüglich des Aufbaus und der Funktionsweise des Spannelementes wird auf die Druckschrift DE 10 2011 106 679 B3 verwiesen.

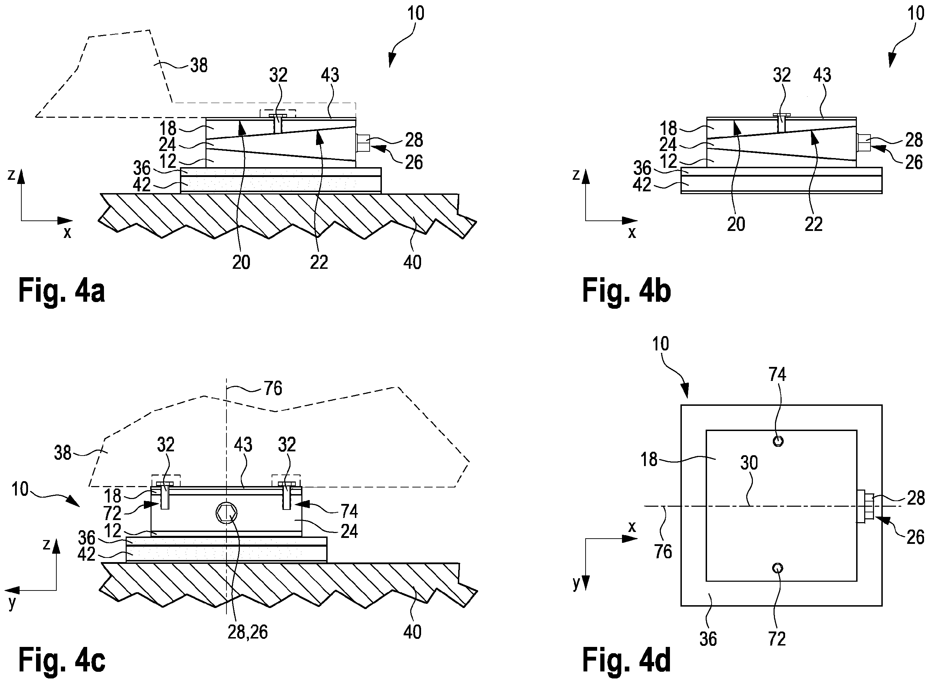

Die Fig. 4a bis 4d zeigen Ansichten einer weiteren Ausführungsform des Nivellierschuhs 10 gemäß dem vierten Aspekt der Erfindung. Gleiche Elemente sind mit gleichen Bezugszeichen gekennzeichnet, im Folgenden wird lediglich auf die Unterschiede eingegangen.

In der dargestellten Ausführungsform sind in der Kopfplatte 18 zwei Gewindebohrungen 72, 74 vorgesehen, die sich zwischen der Standfläche 20 und der zweiten Gleitfläche 22 der Kopfplatte 18 erstrecken. In der dargestellten Ausführungsform erstrecken sich die Gewindebohrungen 72, 74 des Weiteren durch das optional vorgesehene elastische Element 43, welches oberhalb der Kopfplatte 18 angeordnet ist. Die Gewindebohrungen 72, 74 sind vorzugsweise spiegelsymmetrisch zu einer senkrecht zu der Horizontalebene verlaufenden Mittelebene 76 des Nivellierschuhs 10 voneinander beabstandet angeordnet. In jeder Gewindebohrung 72, 74 ist eine als Befestigungsmittel ausgebildete Sperreinrichtung 32 drehbar gelagert. Bei dem Befestigungselement handelt es sich vorzugsweise um eine Schraube, eine Gewindestange, einen Bolzen oder dergleichen, das mit einem zu der Gewindebohrung 72 bzw. 74 komplementären Außengewinde versehen ist. Auf diese Weise kann das Keilelement 24 nach erfolgter Nivellierung mittels der in den Gewindebohrungen 72, 74 drehbar gelagerten Sperreinrichtungen 32 von oben, insbesondere reibschlüssig, fixiert werden. Hierzu wird die Sperreinrichtung 32 von einer Bedienperson per Hand oder mittels eines geeigneten Werkzeugs gedreht und in Anlage mit dem Keilelement 24 gebracht. Die Gewindebohrungen 72, 74 sind derart an der Kopfplatte 18 angebracht, dass diese auch in einem Betriebszustand, in dem die zu lagernde Maschine bzw. Anlage 38 auf der Standfläche 20 der Kopfplatte 18 aufgesetzt ist, frei zugänglich sind.

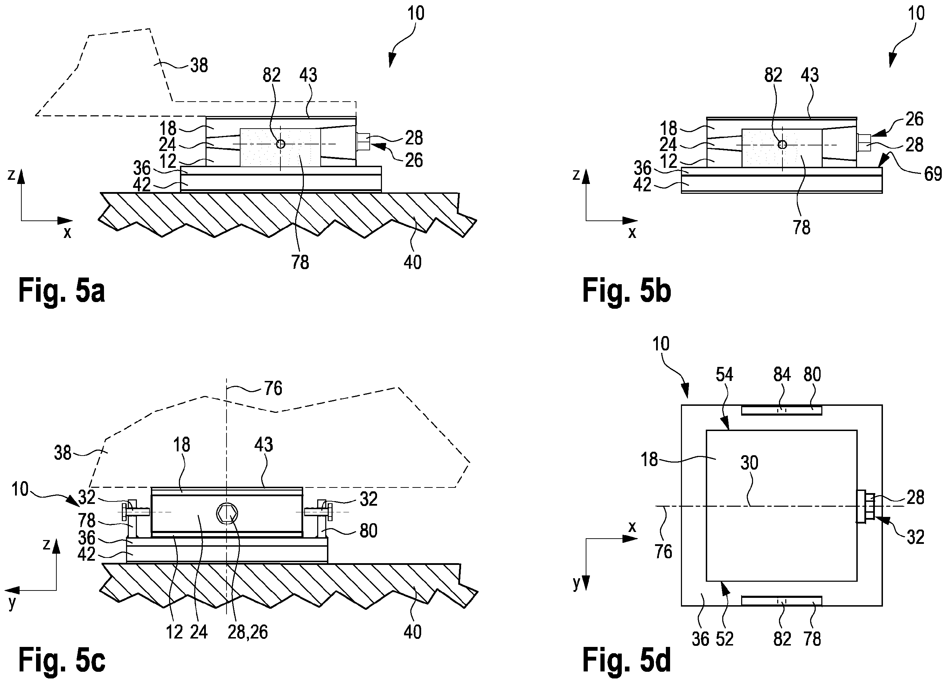

Die Fig. 5a bis 5d zeigen Ansichten einer weiteren Ausführungsform des Nivellierschuhs 10 gemäß dem fünften Aspekt der Erfindung. Gleiche Elemente sind mit gleichen Bezugszeichen gekennzeichnet, im Folgenden wird lediglich auf die Unterschiede eingegangen.

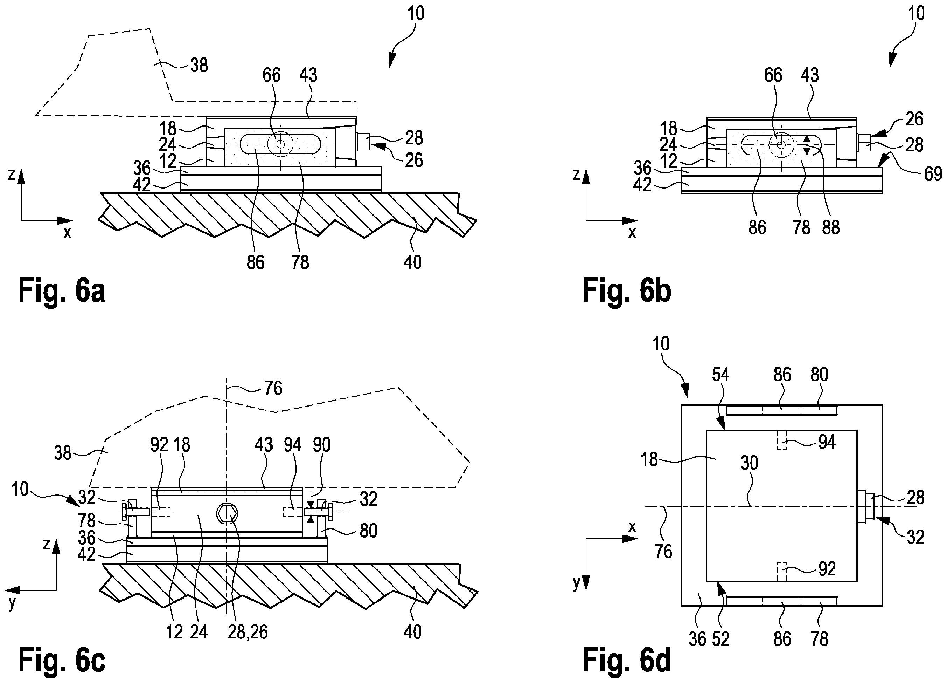

In der dargestellten Ausführungsform weist die Druckverteilungsplatte 36 zwei Vorsprünge 78, 80 auf. Die Vorsprünge 78, 80 erstrecken sich relativ zu der der Bodenfläche 14 zugewandten Oberfläche 69 der Druckverteilungsplatte 36 parallel zu der Z-Achse "nach oben", d.h. in positive Z-Richtung. Auch in dieser Ausführungsform sowie in der Ausführungsform gemäß dem sechsten Aspekt in den Figuren 6a bis 6d ist es jedoch auch möglich, die Vorsprünge 78, 80 anstatt mit der Druckverteilungsplatte 42 mit einem den Nivellierschuh umgebenden Boden zu verbinden. Auch eine Verbindung mit sowohl der Druckverteilungsplatte als auch dem die Druckverteilungsplatte umgebenden Boden ist möglich. Die Vorsprünge 78, 80 sind vorzugsweise mit der Druckverteilungsplatte 36 verschraubt oder verschweißt. In jedem der Vorsprünge 78, 80 ist eine Durchgangsbohrung 82 bzw. 84 vorgesehen, durch die die Sperreinrichtung 32 geführt ist. Die Sperreinrichtung 32 ist als Befestigungselement ausgebildet. Bei dem Befestigungselement handelt es sich vorzugsweise um eine Schraube, eine Gewindestange, einen Bolzen oder dergleichen. Die Vorsprünge 78, 80 sind in der dargestellten Ausführungsform spiegelsymmetrisch zu der Mittelebene 76 und von den parallel zu der Axialrichtung 30 verlaufenden äußeren Seitenwänden 52, 54 des Keilelements 24 beabstandet angeordnet. Um das Keilelement 18 zu fixieren, können die in den Durchgangsbohrungen 82, 84 gelagerten Befestigungselemente in, insbesondere reibschlüssige, Anlage mit den Seitenwänden 52, 54 des Keilelements 24 gebracht werden.

Die Fig. 6a bis 6d zeigen Ansichten einer weiteren Ausführungsform des Nivellierschuhs 10 gemäß dem sechsten Aspekt der Erfindung. Gleiche Elemente sind mit gleichen Bezugszeichen gekennzeichnet, im Folgenden wird lediglich auf die Unterschiede eingegangen.

Die Ausführungsform des Nivellierschuhs 10 gemäß dem sechsten Aspekt der Erfindung unterscheidet sich von der Ausführungsform gemäß dem fünften Aspekt der Erfindung dadurch, dass in den Vorsprüngen 78, 80 gemäß dem sechsten Aspekt der Erfindung jeweils ein Langloch 86 vorgesehen ist, durch das die Sperreinrichtung 32 geführt ist. Das Langloch 86 erstreckt sich in der dargestellten Ausführungsform parallel zu der Axialrichtung 30. Eine Breite 88 des Langlochs 86 ist dabei vorzugsweise größer als ein Durchmesser 90 des Schafts 62 der Sperreinrichtung 32. Die Sperreinrichtung 32 liegt dabei vorzugsweise mit dem Kopf 66 an dem Vorsprung 78 bzw. 80 an. Die Sperreinrichtung 32 ist als Befestigungselement ausgebildet. Bei dem Befestigungselement handelt es sich vorzugsweise um eine Schraube, eine Gewindestange, einen Bolzen oder dergleichen. Um das Keilelement 24 zu fixieren, kann die Sperreinrichtung 32 mit dem Keilelement 24 verschraubt werden. Hierzu sind an den äußeren Seitenwänden 52, 54 des Keilelements 24 entsprechende Gewindebohrungen 92, 94 vorgesehen, die vorzugsweise parallel zu der Y-Achse in das Keilelement 24 hineinragen. Wie bereits voranstehend ausgeführt wurde, ist das Langloch 86 notwendig, um während des Nivellierungsvorgangs die Möglichkeit einer Bewegung des Keilelements 24 relativ zu den Vorsprüngen 78, 80 bereitzustellen, so dass der Nivelliervorgang durchgeführt werden kann.

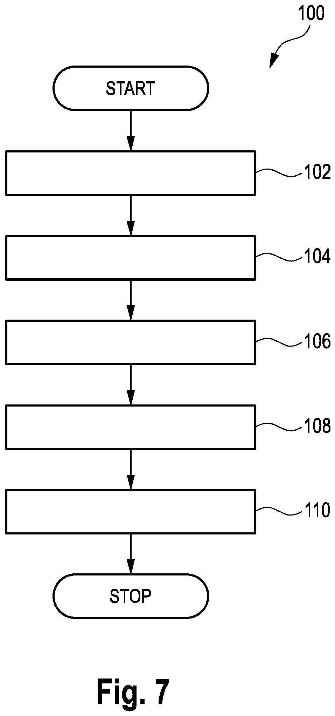

In der Fig. 7 ist schematisch ein Ablaufdiagramm einer Ausführungsform eines Verfahrens 100 gemäß dem siebten Aspekt dargestellt.

Nach dem Start des Verfahrens 100 erfolgt in einem ersten Schritt 102 zunächst das Bereitstellen des Nivellierschuhs 10 mit der Grundplatte 12, die die Bodenfläche 14 und die erste Gleitfläche 16 aufweist, der Kopfplatte 18, die die Standfläche 20 und die zweite Gleitfläche 22 aufweist, mit dem Keilelement 24, das zwischen der Grundplatte 12 und der Kopfplatte 18 anliegend an der ersten und der zweiten Gleitfläche 16, 22 angeordnet ist, und mit der Schaubspindel 24, die drehbar und in der Axialrichtung 30 unverschiebbar in dem Keilelement 24 gelagert ist.

In einem Schritt 104 erfolgt dann ein Bereitstellen der Sperreinrichtung 32 zum Vermeiden eines Verschiebens des Keilelements 24 relativ zu der Kopfplatte 18 und der Grundplatte 12.

In einem Schritt 108 erfolgt dann ein Nivellieren des Nivellierschuhs 10 mittels der Schraubspindel 26. Zu diesem Zweck kann die Schraubspindel 26 insbesondere von einer Bedienperson per Hand oder mittels eines geeigneten Werkzeugs gedreht werden.

In einem weiteren Schritt 110 wird der nivellierte Nivellierschuh 10 mittels der Sperreinrichtung 32 gesperrt.

Bei der Bereitstellung des Nivellierschuhs 10 gemäß dem zweiten Aspekt kann der Schritt 110 des Weiteren einen Schritt des drehmomentfesten Koppelns des Befestigungselements mit dem Spindelkopf 28 der Schraubspindel 26 und einen Schritt des drehfesten Fixierens des mit dem Spindelkopf 28 der Schraubspindel 26 drehmomentfest gekoppelten Befestigungselements an der Haltevorrichtung 44 aufweisen.

Bei der Bereitstellung des Nivellierschuhs 10 gemäß dem dritten Aspekt kann der Schritt 110 des Weiteren einen Schritt des drehmomentübertragenden Koppelns des Befestigungselements mit einem Spindelkopf 28 der Schraubspindel 26 und einen Schritt des drehfesten Fixierens des mit dem Spindelkopf 28 der Schraubspindel 26 drehmomentfest gekoppelten Befestigungselements an dem Vorsprung aufweisen.

Bei der Bereitstellung des Nivellierschuhs 10 gemäß dem zweiten und/oder des dritten Aspekts kann des Weiteren ein Schritt des Durchführens des Spannelements von einer Seite der Bodenfläche 14 durch die Grundplatte 12 vorgesehen sein.

Bei der Bereitstellung des Nivellierschuhs 10 gemäß dem vierten Aspekt erfolgt der Schritt 110 durch Verschrauben des Befestigungselements durch die Gewindebohrung 72 bzw. 74 und gegen eine der zweiten Gleitfläche 22 der Kopfplatte 18 zugewandte Oberfläche des Keilelements 24.

Bei der Bereitstellung des Nivellierschuhs 10 gemäß dem fünften Aspekt wird zum Sperren des nivellierten Nivellierschuhs 10 die Sperreinrichtung 32 bzw. das Befestigungselement mit der parallel zu der Axialrichtung 30 der Schraubspindel 26 verlaufenden äußeren Seitenwand 52 bzw. 54 des Keilelements 24 reibschlüssig in Kontakt gebracht. Des Weiteren kann vorgesehen sein, dass die Sperreinrichtung 32 bzw. das Befestigungselement anschließend an dem Vorsprung 78 bzw. 80 drehfest fixiert wird.

Bei der Bereitstellung des Nivellierschuhs 10 gemäß dem sechsten Aspekt wird zum Sperren des nivellierten Nivellierschuhs 10 die Sperreinrichtung 32 bzw. das Befestigungselement durch das Langloch 86 geführt und mit der in der äußeren Seitenwand 52 bzw. 54 des Keilelements 24 vorgesehenen Gewindebohrung 92 bzw. 94 verschraubt. Des Weiteren kann vorgesehen sein, dass die Sperreinrichtung 32 bzw. das Befestigungselement anschließend an dem Vorsprung 78 bzw. 80 drehfest fixiert wird.

## Patentansprüche

1. Nivellierschuh (10) mit einer Grundplatte (12), die eine Bodenfläche (14) und eine erste Gleitfläche (16) aufweist, einer Kopfplatte (18), die eine Standfläche (20) und eine zweite Gleitfläche (22) aufweist, und mit einem Keilelement (24), das zwischen der Grundplatte (12) und der Kopfplatte (18) anliegend an der ersten und der zweiten Gleitfläche (16, 22) angeordnet ist, wobei das Keilelement (24) eine Schraubspindel (26) aufweist, die drehbar und in einer Axialrichtung (30) der Schraubspindel (26) unverschiebbar in dem Keilelement (24) gelagert ist, wobei eine Drehung der Schraubspindel (26) ein Verschieben des Keilelements (24) relativ zu der Kopfplatte (18) und der Grundplatte (12) bewirkt, wobei der Nivellierschuh (10) des Weiteren eine Sperreinrichtung (32) zum Vermeiden eines Verschiebens des Keilelements (24) relativ zu der Kopfplatte (18) und der Grundplatte (12) aufweist, **dadurch gekennzeichnet, dass** die Sperreinrichtung (32) mit der Schraubspindel (26) wechselwirkt.

2. Nivellierschuh (10) nach Anspruch 1, **dadurch gekennzeichnet, dass** der Nivellierschuh (10) des Weiteren eine an dem Keilelement (24) befestigte Haltevorrichtung (44) zur Aufnahme der Sperreinrichtung (32) aufweist, wobei die Sperreinrichtung (32) ein drehfest an der Haltevorrichtung (44) gelagertes Befestigungselement ist, das mit einem Spindelkopf (28) der Schraubspindel (26) drehmomentübertragend koppelbar ist, insbesondere wobei das Befestigungselement sich koaxial zu der Schraubspindel (24) durch eine Durchgangsbohrung (60) der Haltevorrichtung (44) hindurch erstreckt.

3. Nivellierschuh (10) nach Anspruch 1, **dadurch gekennzeichnet, dass** der Nivellierschuh (10) des Weiteren einen Vorsprung (68) zur Aufnahme der Sperreinrichtung (32) aufweist, und wobei die Sperreinrichtung (32) ein drehfest an dem Vorsprung (68) gelagertes Befestigungselement ist, das mit einem Spindelkopf (28) der Schraubspindel (26) drehmomentübertragend koppelbar ist, insbesondere wobei der Nivellierschuh (10) des Weiteren eine Druckverteilungsplatte (36) aufweist, die mit der Bodenfläche (14) der Grundplatte (12) verbunden ist und den Vorsprung (68) aufweist.

4. Nivellierschuh (10) nach einem der Ansprüche 2 bis 3, **dadurch gekennzeichnet, dass** das Befestigungselement ein äußeres Mitnahmeprofil und der Spindelkopf (28) der Schraubspindel (26) ein zu dem äußeren Mitnahmeprofil komplementäres inneres Mitnahmeprofil aufweist, wobei die Mitnahmeprofile axial miteinander koppelbar sind, um durch das Zusammenwirken der Mitnahmeprofile eine formschlüssige, drehfeste Verbindung des Spindelkopfes (28) und des Befestigungselementes zu erzielen.

5. Nivellierschuh (10) nach einem der Ansprüche 2 bis 4, **dadurch gekennzeichnet, dass** der Nivellierschuh (10) des Weiteren ein Spannelement zum Verspannen der Grundplatte (12), der Kopfplatte (18) und des Keilelements (24) aufweist, wobei das Spannelement in der Form eines Bolzens mit einem Spannbolzenkopf und einem Spannbolzenschaft ausgebildet ist, wobei das Spannelement von einer Seite der Bodenfläche (14) durch die Grundplatte (12) geführt ist und mit dem Spannbolzenkopf an der Grundplatte (12) aufliegt, wobei in dem Spannbolzenschaft ein Langloch ausgebildet ist und die Schraubspindel (26) durch das Langloch geführt ist, und wobei an einem dem Spannbolzenkopf entgegengesetzten Ende des Spannbolzenschafts ein Spanngewinde ausgebildet ist, so dass durch ein Verschrauben des Spanngewindes mit einem Gegenelement ein Verspannen bewirkt werden kann.

6. Nivellierschuh (10) mit einer Grundplatte (12), die eine Bodenfläche (14) und eine erste Gleitfläche (16) aufweist, einer Kopfplatte (18), die eine Standfläche (20) und eine zweite Gleitfläche (22) aufweist, und mit einem Keilelement (24), das zwischen der Grundplatte (12) und der Kopfplatte (18) anliegend an der ersten und der zweiten Gleitfläche (16, 22) angeordnet ist, wobei das Keilelement (24) eine Schraubspindel (26) aufweist, die drehbar und in einer Axialrichtung (30) der Schraubspindel (26) unverschiebbar in dem Keilelement (24) gelagert ist, wobei eine Drehung der Schraubspindel (26) ein Verschieben des Keilelements (24) relativ zu der Kopfplatte (18) und der Grundplatte (12) bewirkt, wobei der Nivellierschuh (10) des Weiteren eine Sperreinrichtung (32) zum Vermeiden eines Verschiebens des Keilelements (24) relativ zu der Kopfplatte (18) und der Grundplatte (12) aufweist, **dadurch gekennzeichnet, dass** die Sperreinrichtung (32) mit dem Keilelement (24) wechselwirkt.

7. Nivellierschuh (10) nach Anspruch 6, **dadurch gekennzeichnet, dass** die Kopfplatte (18) zumindest eine sich zwischen der Standfläche (20) und der zweiten Gleitfläche (22) erstreckende Gewindebohrung (72, 74) zur Aufnahme der Sperreinrichtung (32) aufweist, wobei die Sperreinrichtung (32) ein in der zumindest einen Gewindebohrung (72, 74) drehbar gelagertes Befestigungselement ist, das zwischen einer Sperrstellung, in der das Befestigungselement an einer der zweiten Gleitfläche (22) der Kopfplatte (18) zugewandten Oberfläche des Keilelements (24) anliegt, um das Keilelement (24) zu fixieren, und einer Freigabestellung, in der das Befestigungselement von der der zweiten Gleitfläche (22) der Kopfplatte (18) zugewandten Oberfläche des Keilelements (24) beabstandet ist, bewegbar ist.

8. Nivellierschuh (10) nach Anspruch 6, **dadurch gekennzeichnet, dass** der Nivellierschuh (10) des Weiteren zumindest einen Vorsprung (78, 80) zur Aufnahme der Sperreinrichtung (32) aufweist, wobei die Sperreinrichtung (32) ein, insbesondere drehfest, in einer Durchgangsbohrung (82, 84) des zumindest einen Vorsprungs (78, 80) gelagertes Befestigungselement aufweist, das zwischen einer Sperrstellung, in der das Befestigungselement an einer parallel zu der Axialrichtung (30) der Schraubspindel (26) verlaufenden äußeren Seitenwand (52, 54) des Keilelements (24) anliegt, um das Keilelement (24) zu fixieren, und einer Freigabestellung, in der das Befestigungselement von der äußeren Seitenwand (52, 54) des Keilelements (24) beabstandet ist, bewegbar ist.

9. Nivellierschuh (10) nach Anspruch 8, **dadurch gekennzeichnet, dass** der Nivellierschuh (10) des Weiteren eine Druckverteilungsplatte (36) aufweist, die mit der Bodenfläche (14) der Grundplatte (12) verbunden ist und den zumindest einen Vorsprung (78, 80) aufweist, insbesondere wobei der zumindest eine Vorsprung (78, 80) sich parallel zu der Axialrichtung (30) der Schraubspindel (26) erstreckt und derart ausgebildet ist, dass das Befestigungselement über sämtliche Nivellierbiereiche des Nivellierschuhs (10) mit der äußeren Seitenwand (52, 54) des Keilelements (24) fixierbar ist.

10. Nivellierschuh (10) nach Anspruch 6, **dadurch gekennzeichnet, dass** der Nivellierschuh (10) des Weiteren zumindest einen Vorsprung (78, 80) mit einem Langloch (86) zur Aufnahme der Sperreinrichtung (32) aufweist, wobei die Sperreinrichtung (32) ein, insbesondere drehfest, in dem Langloch (86) des zumindest einen Vorsprungs (70, 80) gelagertes Befestigungselement aufweist, das mit einer in einer parallel zu der Axialrichtung (30) der Schraubspindel (26) verlaufenden äußeren Seitenwand (52, 54) des Keilelements (24) vorgesehenen Gewindebohrung (92, 94) verschraubbar ist.

11. Nivellierschuh (10) nach Anspruch 10, **dadurch gekennzeichnet, dass** der Nivellierschuh (10) des Weiteren eine Druckverteilungsplatte (36) aufweist, die mit der Bodenfläche (14) der Grundplatte (12) verbunden ist und den zumindest einen Vorsprung (78, 80) aufweist, insbesondere wobei eine Breite (88) des Langlochs (86) größer als ein Durchmesser (90) des Befestigungselements ist, derart, dass das Befestigungselement über sämtliche Nivellierbiereiche des Nivellierschuhs (10) mit der äußeren Seitenwand (52, 54) des Keilelements (24) verschraubbar ist.

12. Verfahren (100) zum Montieren eines Nivellierschuhs (10), mit den folgenden Schritten:
- Bereitstellen (102) eines Nivellierschuhs (10) mit einer Grundplatte (12), die eine Bodenfläche (14) und eine erste Gleitfläche (16) aufweist, einer Kopfplatte (18), die eine Standfläche (20) und eine zweite Gleitfläche (22) aufweist, und mit einem Keilelement (24), das zwischen der Grundplatte (12) und der Kopfplatte (18) anliegend an der ersten und der zweiten Gleitfläche (16, 22) angeordnet ist, wobei das Keilelement (24) eine Schraubspindel (26) aufweist, die drehbar und in einer Axialrichtung (30) der Schraubspindel (26) unverschiebbar in dem Keilelement (24) gelagert ist, wobei eine Drehung der Schraubspindel (26) ein Verschieben des Keilelements (24) relativ zu der Kopfplatte (18) und der Grundplatte (12) bewirkt,
- Bereitstellen (104) einer Sperreinrichtung (32) zum Vermeiden eines Verschiebens des Keilelements (24) relativ zu der Kopfplatte (18) und der Grundplatte (12),
- Nivellieren (106) des Nivellierschuhs (10) mittels der Schraubspindel (26), und
- Sperren (110) des nivellierten Nivellierschuhs (10) mittels der Sperreinrichtung (32), **dadurch gekennzeichnet, dass** die Sperreinrichtung (32) mit der Schraubspindel (26) wechselwirkt.

13. Verfahren (100) nach Anspruch 12, **dadurch gekennzeichnet, dass** der Nivellierschuh (10) des Weiteren eine an dem Keilelement (24) befestigte Haltevorrichtung (44) zur Aufnahme der Sperreinrichtung (32) aufweist, wobei die Sperreinrichtung (32) ein Befestigungselement ist, und wobei der Schritt des Sperrens (110) des nivellierten Nivellierschuhs (10) folgende Schritte aufweist:
- Drehmomentfestes Koppeln des Befestigungselements mit einem Spindelkopf (28) der Schraubspindel (26), und
- Drehfestes Fixieren des mit dem Spindelkopf (28) der Schraubspindel (26) drehmomentfest gekoppelten Befestigungselements an der Haltevorrichtung (44).

14. Verfahren (100) nach Anspruch 12, **dadurch gekennzeichnet, dass** der Nivellierschuh (10) des Weiteren einen Vorsprung (68) zur Aufnahme der Sperreinrichtung (32) aufweist, wobei die Sperreinrichtung (32) ein Befestigungselement ist, und wobei der Schritt des Sperrens (110) des nivellierten Nivellierschuhs (10) ein drehmomentübertragendes Koppeln des Befestigungselements mit einem Spindelkopf (28) der Schraubspindel (26) und ein drehfestes Fixieren des mit dem Spindelkopf (28) der Schraubspindel (26) drehmomentfest gekoppelten Befestigungselements an dem Vorsprung (68) aufweist.

15. Verfahren (100) zum Montieren eines Nivellierschuhs (10), mit den folgenden Schritten:
- Bereitstellen (102) eines Nivellierschuhs (10) mit einer Grundplatte (12), die eine Bodenfläche (14) und eine erste Gleitfläche (16) aufweist, einer Kopfplatte (18), die eine Standfläche (20) und eine zweite Gleitfläche (22) aufweist, und mit einem Keilelement (24), das zwischen der Grundplatte (12) und der Kopfplatte (18) anliegend an der ersten und der zweiten Gleitfläche (16, 22) angeordnet ist, wobei das Keilelement (24) eine Schraubspindel (26) aufweist, die drehbar und in einer Axialrichtung (30) der Schraubspindel (26) unverschiebbar in dem Keilelement (24) gelagert ist, wobei eine Drehung der Schraubspindel (26) ein Verschieben des Keilelements (24) relativ zu der Kopfplatte (18) und der Grundplatte (12) bewirkt,
- Bereitstellen (104) einer Sperreinrichtung (32) zum Vermeiden eines Verschiebens des Keilelements (24) relativ zu der Kopfplatte (18) und der Grundplatte (12),
- Nivellieren (106) des Nivellierschuhs (10) mittels der Schraubspindel (26), und
- Sperren (110) des nivellierten Nivellierschuhs (10) mittels der Sperreinrichtung (32), **dadurch gekennzeichnet, dass** die Sperreinrichtung (32) mit dem Keilelement (24) wechselwirkt.

## Claims

1. A leveling shoe (10) comprising a base plate (12) which has a bottom surface (14) and a first sliding surface (16), a top plate (18) which has a standing surface (20) and a second sliding surface (22), and a wedge element (24) which is arranged between the base plate (12) and the top plate (18) in contact with the first and second sliding surfaces (16, 22), the wedge element (24) having a screw spindle (26) which is rotatably and in an axial direction (30) of the screw spindle (26) non-displaceably mounted in the wedge element (24), wherein a rotation of the screw spindle (26) causes a displacement of the wedge element (24) relative to the top plate (18) and the base plate (12), wherein the leveling shoe (10) further comprises a blocking device (32) for preventing a displacement of the wedge element (24) relative to the top plate (18) and the base plate (12), **characterized in that** the blocking device (32) interacts with the screw spindle (26).

2. The leveling shoe (10) according to claim 1, **characterized in that** the leveling shoe (10) further comprises a holding device (44) for receiving the blocking device (32), which is attached to the wedge element (24), wherein the blocking device (32) is a fastening element which is mounted on the holding device (44) in a rotationally fixed manner and which is couplable to a spindle head (28) of the screw spindle (26) in a torque-transmitting manner, in particular wherein the fastening element extends coaxially in relation to the screw spindle (24) through a through bore (60) of the holding device (44).

3. The leveling shoe (10) according to claim 1, **characterized in that** the leveling shoe (10) further comprises a projection (68) for receiving the blocking device (32), and wherein the blocking device (32) is a fastening element which is mounted on the projection (68) in a rotationally fixed manner and which is coupleable in a torque-transmitting manner to a spindle head (28) of the screw spindle (26), in particular wherein the leveling shoe (10) further comprises a pressure distribution plate (36) which is connected to the bottom surface (14) of the base plate (12) and comprises the projection (68).

4. The leveling shoe (10) according to any one of claims 2 to 3, **characterized in that** the fastening element has an outer entrainment profile and the spindle head (28) of the screw spindle (26) has an inner entrainment profile complementary to the outer entrainment profile, the entrainment profiles being axially couplable to one another to achieve a positive-locking and rotationally fixed connection of the spindle head (28) and the fastening element by the interaction of the entrainment profiles.

5. The leveling shoe (10) according to any one of claims 2 to 4, **characterized in that** the leveling shoe (10) further comprises a clamping element for clamping the base plate (12), the top plate (18) and the wedge element (24), the clamping element being configured in the form of a bolt having a clamping bolt head and a clamping bolt shaft, wherein the clamping element is guided through the base plate (12) from one side of the bottom surface (14) and rests with the clamping bolt head on the base plate (12), wherein an elongated hole is formed in the clamping bolt shaft and the screw spindle (26) is guided through the elongated hole, and wherein a clamping thread is formed at an end of the clamping bolt shaft opposite the clamping bolt head, so that clamping can be caused by screwing the clamping thread to a counter-element.

6. A leveling shoe (10) comprising a base plate (12) which has a bottom surface (14) and a first sliding surface (16), a top plate (18) which has a standing surface (20) and a second sliding surface (22), and a wedge element (24) which is arranged between the base plate (12) and the top plate (18) in contact with the first and second sliding surfaces (16, 22), the wedge element (24) having a screw spindle (26) which is rotatably and in an axial direction (30) of the screw spindle (26) non-displaceably mounted in the wedge element (24), wherein a rotation of the screw spindle (26) causes a displacement of the wedge element (24) relative to the top plate (18) and the base plate (12), wherein the leveling shoe (10) further comprises a blocking device (32) for preventing a displacement of the wedge element (24) relative to the top plate (18) and the base plate (12), **characterized in that** the blocking device (32) interacts with the wedge element (24).

7. The leveling shoe (10) according to claim 6, **characterized in that** the top plate (18) comprises at least one threaded bore (72, 74) for receiving the blocking device (32), which extends between the standing surface (20) and the second sliding surface (22), wherein the blocking device (32) is a fastening element which is rotatably mounted in the at least one threaded bore (72, 74) and which is movable between a blocking position, in which the fastening element rests against a surface of the wedge element (24) facing the second sliding surface (22) of the top plate (18) in order to fix the wedge element (24), and a release position, in which the fastening element is spaced apart from the surface of the wedge element (24) facing the second sliding surface (22) of the top plate (18).

8. The leveling shoe (10) according to claim 6, **characterized in that** the leveling shoe (10) further comprises at least one projection (78, 80) for receiving the blocking device (32), wherein the blocking device (32) comprises a fastening element which is mounted, in particular in a rotationally fixed manner, in a through bore (82, 84) of the at least one projection (78, 80) and which is movable between a blocking position, in which the fastening element rests against an outer side wall (52, 54) of the wedge element (24), which outer side wall extends parallel to the axial direction (30) of the screw spindle (26), in order to fix the wedge element (24), and a release position, in which the fastening element is spaced apart from the outer side wall (52, 54) of the wedge element (24).

9. The leveling shoe (10) according to claim 8, **characterized in that** the leveling shoe (10) further comprises a pressure distribution plate (36) which is connected to the bottom surface (14) of the base plate (12) and which comprises the at least one projection (78, 80), in particular wherein the at least one projection (78, 80) extends parallel to the axial direction (30) of the screw spindle (26) and is configured such that the fastening element is fixable to the outer side wall (52, 54) of the wedge element (24) across all leveling ranges of the leveling shoe (10).

10. The leveling shoe (10) according to claim 6, **characterized in that** the leveling shoe (10) further comprises at least one projection (78, 80) having an elongated hole (86) for receiving the blocking device (32), wherein the blocking device (32) comprises a fastening element which is mounted, in particular in a rotationally fixed manner, in the elongated hole (86) of the at least one projection (70, 80) and which can be screwed to a threaded bore (92, 94) provided in an outer side wall (52, 54) of the wedge element (24), which outer side wall extends parallel to the axial direction (30) of the screw spindle (26).

11. The leveling shoe (10) according to claim 10, **characterized in that** the leveling shoe (10) further comprises a pressure distribution plate (36) which is connected to the bottom surface (14) of the base plate (12) and which comprises the at least one projection (78, 80), in particular wherein a width (88) of the elongated hole (86) is greater than a diameter (90) of the fastening element, such that the fastening element can be screwed to the outer side wall (52, 54) of the wedge element (24) across all leveling ranges of the leveling shoe (10).

12. A method (100) for mounting a leveling shoe (10), comprising the following steps:
- Providing (102) a leveling shoe (10) comprising a base plate (12) which has a bottom surface (14) and a first sliding surface (16), a top plate (18) which has a standing surface (20) and a second sliding surface (22), and a wedge element (24) which is arranged between the base plate (12) and the top plate (18) in contact with the first and second sliding surfaces (16, 22), the wedge element (24) having a screw spindle (26) which is rotatably and in an axial direction (30) of the screw spindle (26) non-displaceably mounted in the wedge element (24), wherein a rotation of the screw spindle (26) causes a displacement of the wedge element (24) relative to the top plate (18) and the base plate (12),
- Providing (104) a blocking device (32) for preventing a displacement of the wedge element (24) relative to the top plate (18) and the base plate (12),
- Leveling (106) the leveling shoe (10) by means of the screw spindle (26), and
- Blocking (110) the leveled leveling shoe (10) by means of the blocking device (32), **characterized in that** the blocking device (32) interacts with the screw spindle (26).

13. The method (100) according to claim 12, **characterized in that** the leveling shoe (10) further comprises a holding device (44) for receiving the blocking device (32), which is attached to the wedge element (24), wherein the blocking device (32) is a fastening element, and wherein the step of blocking (110) the leveled leveling shoe (10) comprises the following steps:
- Coupling the fastening element to a spindle head (28) of the screw spindle (26) in a torque-resistant manner, and
- Fixing the fastening element coupled to the spindle head (28) of the screw spindle (26) in a torque-resistant manner to the holding device (44) in a rotationally fixed manner.

14. The method (100) according to claim 12, **characterized in that** the leveling shoe (10) further comprises a projection (68) for receiving the blocking device (32), wherein the blocking device (32) is a fastening element, and wherein the step of blocking (110) the leveled leveling shoe (10) comprises coupling the fastening element to a spindle head (28) of the screw spindle (26) in a torque-transmitting manner and fixing the fastening element coupled to the spindle head (28) of the screw spindle (26) in a torque-resistant manner to the projection (68) in a rotationally fixed manner.

15. A method (100) for mounting a leveling shoe (10), comprising the following steps:
- Providing (102) a leveling shoe (10) comprising a base plate (12) which has a bottom surface (14) and a first sliding surface (16), a top plate (18) which has a standing surface (20) and a second sliding surface (22), and a wedge element (24) which is arranged between the base plate (12) and the top plate (18) in contact with the first and second sliding surfaces (16, 22), the wedge element (24) having a screw spindle (26) which is rotatably and in an axial direction (30) of the screw spindle (26) non-displaceably mounted in the wedge element (24), wherein a rotation of the screw spindle (26) causes a displacement of the wedge element (24) relative to the top plate (18) and the base plate (12),
- Providing (104) a blocking device (32) for preventing a displacement of the wedge element (24) relative to the top plate (18) and the base plate (12),
- Leveling (106) the leveling shoe (10) by means of the screw spindle (26), and
- Blocking (110) the leveled leveling shoe (10) by means of the blocking device (32), **characterized in that** the blocking device (32) interacts with the wedge element (24).

## Revendications

1. Patin de nivellement (10) comportant une plaque de base (12) qui présente une surface de fond (14) et une première surface de glissement (16), une plaque supérieure (18) qui présente une surface d'appui (20) et une seconde surface de glissement (22), et comportant un élément formant cale (24) qui est disposé entre la plaque de base (12) et la plaque supérieure (18) en s'appuyant sur la première et la seconde surface de glissement (16, 22), dans lequel l'élément formant cale (24) présente une broche filetée (26) qui est montée dans l'élément formant cale (24) de manière à pouvoir tourner et à ne pas pouvoir se déplacer dans une direction axiale (30) de la broche filetée (26), dans lequel une rotation de la broche filetée (26) provoque un déplacement de l'élément formant cale (24) par rapport à la plaque supérieure (18) et à la plaque de base (12), dans lequel le patin de nivellement (10) présente en outre un appareil de blocage (32) permettant d'empêcher un déplacement de l'élément formant cale (24) par rapport à la plaque supérieure (18) et à la plaque de base (12), **caractérisé en ce que** l'appareil de blocage (32) interagit avec la broche filetée (26).

2. Patin de nivellement (10) selon la revendication 1, **caractérisé en ce que** le patin de nivellement (10) présente en outre un dispositif de maintien (44) fixé à l'élément formant cale (24) et permettant de recevoir l'appareil de blocage (32), dans lequel l'appareil de blocage (32) est un élément de fixation monté de manière solidaire en rotation sur le dispositif de maintien (44) et pouvant être accouplé à une tête de broche (28) de la broche filetée (26) de manière à transmettre un couple, en particulier dans lequel l'élément de fixation s'étend de manière coaxiale par rapport à la broche filetée (24) à travers un alésage traversant (60) du dispositif de maintien (44).

3. Patin de nivellement (10) selon la revendication 1, **caractérisé en ce que** le patin de nivellement (10) présente en outre une saillie (68) permettant de recevoir l'appareil de blocage (32), et dans lequel l'appareil de blocage (32) est un élément de fixation monté de manière solidaire en rotation sur la saillie (68) et pouvant être accouplé à une tête de broche (28) de la broche filetée (26) de manière à transmettre un couple, en particulier dans lequel le patin de nivellement (10) présente en outre une plaque de répartition de pression (36) qui est reliée à la surface de fond (14) de la plaque de base (12) et qui présente la saillie (68).

4. Patin de nivellement (10) selon l'une des revendications 2 à 3,
**caractérisé en ce que** l'élément de fixation présente un profil d'entraînement extérieur et la tête de broche (28) de la broche filetée (26) présente un profil d'entraînement intérieur complémentaire au profil d'entraînement extérieur, dans lequel les profils d'entraînement peuvent être accouplés axialement l'un à l'autre afin d'obtenir, par la coopération des profils d'entraînement, une liaison par complémentarité de forme et solidaire en rotation de la tête de broche (28) et de l'élément de fixation.

5. Patin de nivellement (10) selon l'une des revendications 2 à 4,
**caractérisé en ce que** le patin de nivellement (10) présente en outre un élément de serrage permettant de serrer la plaque de base (12), la plaque supérieure (18) et l'élément formant cale (24), dans lequel l'élément de serrage est réalisé sous la forme d'un boulon comportant une tête de boulon de serrage et une tige de boulon de serrage, dans lequel l'élément de serrage est guidé par un côté de la surface de fond (14) à travers la plaque de base (12) et repose avec la tête de boulon de serrage sur la plaque de base (12), dans lequel un trou oblong est réalisé dans la tige de boulon de serrage et la broche filetée (26) est guidée à travers le trou oblong, et dans lequel un filetage de serrage est réalisé à une extrémité de la tige de boulon de serrage opposée à la tête de boulon de serrage, de sorte qu'un serrage peut être provoqué par un vissage du filetage de serrage avec un contre-élément.

6. Patin de nivellement (10) comportant une plaque de base (12) qui présente une surface de fond (14) et une première surface de glissement (16), une plaque supérieure (18) qui présente une surface d'appui (20) et une seconde surface de glissement (22), et comportant un élément formant cale (24) qui est disposé entre la plaque de base (12) et la plaque supérieure (18) en s'appuyant sur la première et la seconde surface de glissement (16, 22), dans lequel l'élément formant cale (24) présente une broche filetée (26) qui est montée dans l'élément formant cale (24) de manière à pouvoir tourner et à ne pas pouvoir se déplacer dans une direction axiale (30) de la broche filetée (26), dans lequel une rotation de la broche filetée (26) provoque un déplacement de l'élément formant cale (24) par rapport à la plaque supérieure (18) et à la plaque de base (12), dans lequel le patin de nivellement (10) présente en outre un appareil de blocage (32) permettant d'empêcher un déplacement de l'élément formant cale (24) par rapport à la plaque supérieure (18) et à la plaque de base (12), **caractérisé en ce que** l'appareil de blocage (32) interagit avec l'élément formant cale (24).

7. Patin de nivellement (10) selon la revendication 6, **caractérisé en ce que** la plaque supérieure (18) présente au moins un alésage fileté (72, 74) s'étendant entre la surface d'appui (20) et la seconde surface de glissement (22) et permettant de recevoir l'appareil de blocage (32), dans lequel l'appareil de blocage (32) est un élément de fixation monté de manière à pouvoir tourner dans l'au moins un alésage fileté (72, 74) et est mobile entre une position de blocage, dans laquelle l'élément de fixation s'appuie contre une surface de l'élément formant cale (24) tournée vers la seconde surface de glissement (22) de la plaque supérieure (18) afin de fixer l'élément formant cale (24), et une position de libération, dans laquelle l'élément de fixation est écarté de la surface de l'élément formant cale (24) tournée vers la seconde surface de glissement (22) de la plaque supérieure (18).

8. Patin de nivellement (10) selon la revendication 6, **caractérisé en ce que** le patin de nivellement (10) présente en outre au moins une saillie (78, 80) permettant de recevoir l'appareil de blocage (32), dans lequel l'appareil de blocage (32) présente un élément de fixation monté, en particulier de manière solidaire en rotation, dans un alésage traversant (82, 84) de l'au moins une saillie (78, 80), lequel élément de fixation est mobile entre une position de blocage, dans laquelle l'élément de fixation s'appuie contre une paroi latérale extérieure (52, 54) de l'élément formant cale (24), laquelle paroi latérale extérieure s'étend parallèlement à la direction axiale (30) de la broche filetée (26), afin de fixer l'élément formant cale (24), et une position de libération, dans laquelle l'élément de fixation est écarté de la paroi latérale extérieure (52, 54) de l'élément formant cale (24).

9. Patin de nivellement (10) selon la revendication 8, **caractérisé en ce que** le patin de nivellement (10) présente en outre une plaque de répartition de pression (36) qui est reliée à la surface de fond (14) de la plaque de base (12) et qui présente l'au moins une saillie (78, 80), en particulier dans lequel l'au moins une saillie (78, 80) s'étend parallèlement à la direction axiale (30) de la broche filetée (26) et est réalisée de telle sorte que l'élément de fixation peut être fixé à la paroi latérale extérieure (52, 54) de l'élément formant cale (24) par l'intermédiaire de toutes les zones de nivellement du patin de nivellement (10).

10. Patin de nivellement (10) selon la revendication 6, **caractérisé en ce que** le patin de nivellement (10) présente en outre au moins une saillie (78, 80) comportant un trou oblong (86) et permettant de recevoir l'appareil de blocage (32), dans lequel l'appareil de blocage (32) présente un élément de fixation monté, en particulier de manière solidaire en rotation, dans le trou oblong (86) de l'au moins une saillie (70, 80), lequel élément de fixation peut être vissé avec un alésage fileté (92, 94) prévu dans une paroi latérale extérieure (52, 54) de l'élément formant cale (24), laquelle paroi latérale extérieure s'étend parallèlement à la direction axiale (30) de la broche filetée (26).

11. Patin de nivellement (10) selon la revendication 10, **caractérisé en ce que** le patin de nivellement (10) présente en outre une plaque de répartition de pression (36) qui est reliée à la surface de fond (14) de la plaque de base (12) et qui présente l'au moins une saillie (78, 80), en particulier dans lequel une largeur (88) du trou oblong (86) est supérieure à un diamètre (90) de l'élément de fixation, de telle sorte que l'élément de fixation peut être vissé sur la paroi latérale extérieure (52, 54) de l'élément formant cale (24) sur toutes les zones de nivellement du patin de nivellement (10).

12. Procédé (100) pour le montage d'un patin de nivellement (10), comportant les étapes suivantes :
- fourniture (102) d'un patin de nivellement (10) comportant une plaque de base (12) qui présente une surface de fond (14) et une première surface de glissement (16), une plaque supérieure (18) qui présente une surface d'appui (20) et une seconde surface de glissement (22), et comportant un élément formant cale (24) qui est disposé entre la plaque de base (12) et la plaque supérieure (18) en s'appuyant sur la première et la seconde surface de glissement (16, 22), dans lequel l'élément formant cale (24) présente une broche filetée (26) qui est montée dans l'élément formant cale (24) de manière à pouvoir tourner et à ne pas pouvoir se déplacer dans une direction axiale (30) de la broche filetée (26), dans lequel une rotation de la broche filetée (26) provoque un déplacement de l'élément formant cale (24) par rapport à la plaque supérieure (18) et à la plaque de base (12),
- fourniture (104) d'un appareil de blocage (32) permettant d'empêcher un déplacement de l'élément formant cale (24) par rapport à la plaque supérieure (18) et à la plaque de base (12),
- nivellement (106) du patin de nivellement (10) au moyen de la broche filetée (26), et
- blocage (110) du patin de nivellement (10) nivelé au moyen de l'appareil de blocage (32), **caractérisé en ce que** l'appareil de blocage (32) interagit avec la broche filetée (26).

13. Procédé (100) selon la revendication 12, **caractérisé en ce que** le patin de nivellement (10) présente en outre un dispositif de maintien (44) fixé à l'élément formant cale (24) et permettant de recevoir l'appareil de blocage (32), dans lequel l'appareil de blocage (32) est un élément de fixation, et dans lequel l'étape de blocage (110) du patin de nivellement (10) nivelé présente les étapes suivantes :
- accouplement de manière à résister à un couple de l'élément de fixation à une tête de broche (28) de la broche filetée (26), et
- fixation de manière fixe en rotation de l'élément de fixation accouplé de manière à résister à un couple à la tête de broche (28) de la broche filetée (26) sur le dispositif de maintien (44).

14. Procédé (100) selon la revendication 12, **caractérisé en ce que** le patin de nivellement (10) présente en outre une saillie (68) permettant de recevoir l'appareil de blocage (32), dans lequel l'appareil de blocage (32) est un élément de fixation, et dans lequel l'étape de blocage (110) du patin de nivellement (10) nivelé présente un accouplement par transmission de couple de l'élément de fixation à une tête de broche (28) de la broche filetée (26) et une fixation fixe en rotation de l'élément de fixation accouplé de manière à résister à un couple à la tête de broche (28) de la broche filetée (26) sur la saillie (68).

15. Procédé (100) pour le montage d'un patin de nivellement (10), comportant les étapes suivantes :
- fourniture (102) d'un patin de nivellement (10) comportant une plaque de base (12) qui présente une surface de fond (14) et une première surface de glissement (16), une plaque supérieure (18) qui présente une surface d'appui (20) et une seconde surface de glissement (22), et comportant un élément formant cale (24) qui est disposé entre la plaque de base (12) et la plaque supérieure (18) en s'appuyant sur la première et la seconde surface de glissement (16, 22), dans lequel l'élément formant cale (24) présente une broche filetée (26) qui est montée dans l'élément formant cale (24) de manière à pouvoir tourner et à ne pas pouvoir se déplacer dans une direction axiale (30) de la broche filetée (26), dans lequel une rotation de la broche filetée (26) provoque un déplacement de l'élément formant cale (24) par rapport à la plaque supérieure (18) et à la plaque de base (12),
- fourniture (104) d'un appareil de blocage (32) permettant d'empêcher un déplacement de l'élément formant cale (24) par rapport à la plaque supérieure (18) et à la plaque de base (12),
- nivellement (106) du patin de nivellement (10) au moyen de la broche filetée (26), et
- blocage (110) du patin de nivellement (10) nivelé au moyen de l'appareil de blocage (32), **caractérisé en ce que** l'appareil de blocage (32) interagit avec l'élément formant cale (24).
